**Europäisches Patentamt**

**European Patent Office**

**Office européen des brevets**

(19)

(11) **EP 1 541 389 A2**

(12) # EUROPEAN PATENT APPLICATION

(43) Date of publication:
**15.06.2005 Bulletin 2005/24**

(51) Int Cl.⁷: **B60G 17/015**, B60G 17/08

(21) Application number: **04024056.6**

(22) Date of filing: **27.09.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **26.09.2003 JP 2003336127
03.10.2003 JP 2003346000**

(62) Document number(s) of the earlier application(s) in
accordance with Art. 76 EPC:
**04022941.1 / 1 518 722**

(71) Applicant: **AISIN AW CO., LTD.
Anjo-shi Aichi 444-1192 (JP)**

(72) Inventor: **Ogawa, Fumiharu
Okazaki-shi Aichi 444-8564 (JP)**

(74) Representative: **Kramer - Barske - Schmidtchen
European Patent Attorneys
Patenta
Radeckestrasse 43
81245 München (DE)**

Remarks:
This application was filed on 08 - 10 - 2004 as a
divisional application to the application mentioned
under INID code 62.

(54) **Suspension control system and suspension control method for a vehicle**

(57) When a vehicle approaches a comer, a microprocessor, responsive to a determination that a detected degree of roughness of the road surface corresponds to the most moderate roughness, sets the damping force for the vehicle suspension units, on the basis of the detected degree of roughness, vehicle speed and a radius of curvature and comer information from a navigation system. In the case of a determination that the detected degree of roughness does not correspond to the most moderate roughness, a damping level is set on the basis of the detected degree of roughness, vehicle speed and radius of curvature.

FIG.1

**Description**

BACKGROUND OF THE INVENTION

1. Field of the Invention

The present invention relates to a suspension control system and to a suspension control method for a vehicle.

2. Description of the Related Art

JP-A-9-114367 discloses a suspension control system in which the suspension is adjusted in advance, for example, just before the vehicle starts to turn a comer in traveling a predetermined route, on the basis of the speed of the vehicle and comer information obtained from a navigation device within the vehicle.

However, in the suspension control system of JP-A-9-114367, the comer information obtained from the navigation device includes no information relative to the state of the road surface at the comer. Accordingly, for example, when the road surface at the comer is irregular and/or slippery, steering during travel of the vehicle around the comer may become unstable and the driver may feel riding discomfort (an unpleasant sensation).

SUMMARY OF THE INVENTION

Therefore, it is an object of the present invention to provide a vehicle suspension control system and a suspension control method which, when a vehicle approaches a comer during travel, the state of the road surface is detected and information regarding the detected state of the road surface is combined with information from a navigation system describing the comer, thereby controlling the suspension means during travel of the vehicle.

Appended claim 1 is directed towards a suspension control system providing a solution for the object of the invention.

Appended claim 14 is directed towards a suspension control method providing a solution for the object of the invention.

Appended subclaims are directed towards advantageous embodiments of their respective independent claims.

Accordingly, the present invention provides a vehicular suspension control system for a vehicle equipped with a navigation system which controls system includes:

suspension means (S1 - S4) interposed between a wheel support element (R1, R2) and the frame (B) of the vehicle, for providing a damping force;

roughness state detecting means for detecting a degree of roughness of a road surface traveled by the vehicle;

vehicle-speed detecting means (30c) for detecting speed of the vehicle;

cornering detecting means (42) for detecting cornering by the vehicle;

entrance determining means (145, 146) for determining entrance of the vehicle into a turn around comer (T) in accordance with the determination of the cornering detecting means;

good-road adjustment calculating means (132, 133 - 137, 142, 143, 147, 143a, 147a) for, when the vehicle approaches the comer and the degree of roughness detected by the roughness detecting means corresponds to a good road surface, calculating a good-road adjustment of damping force of the suspension means on the basis of the detected degree of roughness, detected vehicle speed and comer information regarding the comer from the navigation system;

bad-road adjustment calculating means (132, 133 - 137, 142, 143, 145a) for, responsive to approach of the vehicle to the comer and a degree of roughness state detected by the roughness detecting means which does not correspond to a good road surface, and, if the vehicle is determined to have entered the turn around the comer, calculating a bad-road adjustment of damping force of the suspension means on the basis of the detected degree of roughness, the detected vehicle speed and comer information regarding the comer from the navigation system; and

output means (150, 60a - 60d) for outputting to the suspension means the good-road adjustment calculated by the good-road adjustment calculating means or the bad-road adjustment calculated by the bad-road adjustment calculating means.

Thus, when the vehicle approaches a comer, if the degree of roughness of the road surface corresponds to a good road surface, a good-road adjustment is calculated on a basis of a good road surface, the detected vehicle speed and the comer information, and is output to the suspension means. On the other hand, if the degree of roughness of the road surface does not correspond to a good road surface, a bad-road adjustment is calculated on a basis of the detected degree of roughness, the detected vehicle speed and the comer information determined as the vehicle enters the turn at the comer, and is output to the suspension means.

Accordingly, when the vehicle approaches the comer, if the road surface has a degree of roughness corresponding to a good road surface, the damping force of the suspension means before entering the turn at the comer is controlled in a manner corresponding to a good-road adjustment, thus favorably maintaining steering stability of the vehicle in turning the comer. On the other hand, if the degree of roughness of the road surface where the vehicle approaches the comer does not corresponding to a good road surface, the damping force of the suspension means is controlled in a manner corresponding to the bad-road adjustment when entering the comer, thus, in this case also, favorably maintaining steering stability and riding comfort of the vehicle in turning the comer.

In cornering if, upon entering the turn around the corner, after detection of a good road surface in the approach to a comer and output of a good road adjustment, the detected degree of roughness no longer corresponds to a good road surface, a bad-road adjustment to the damping force of the suspension means is calculated as above and output to the suspension means. Accordingly, when the vehicle approaches a comer, in the case where the road surface changes from a degree of roughness corresponding to a good road surface to a degree of roughness not corresponding to a good road surface, the damping force of the suspension means is thereafter controlled in accordance with the bad-road adjustment amount so that, in travel around the comer, steering stability and riding comfort are maintained.

Instead of bad-road adjustment calculating means (132, 133 - 137, 142, 143, 145a) the control system of the present invention may utilize normal travel adjustment calculating means (132, 133 - 137, 142, 143, 147, 142a, 148a) for, when the detected degree of roughness no longer corresponds to a good road surface, calculating a normal travel adjustment for damping force of the suspension means on the basis of the detected degree of roughness. The normal travel adjustment means may calculate the normal travel adjustment on the basis of either the detected degree of roughness alone or on the basis of the detected degree of roughness in combination with other detected condition or conditions.

If, in turning a comer, the detected degree of roughness changes from that which has the suspension means controlled in accordance with a bad-road adjustment or with a normal-travel adjustment to that corresponding to a good road surface state, at that point a good-road adjustment is calculated as above on the basis of the detected degree of roughness, the detected vehicle speed and the comer information, and is output to the suspension means. Accordingly, when the vehicle approaches a comer, in the case that the road surface changes from a degree of roughness not corresponding to a good road surface to a degree of roughness corresponding to a good road surface, the damping force of the suspension means is controlled in a manner corresponding to a good-road adjustment amount.

In another embodiment, the vehicular suspension control system of the present invention includes:

suspension means (S1 - S4) interposed between a wheel support member (R1, R2) and the frame of the vehicle to provide a damping force;
roughness state detecting means (41 a - 41 d) for detecting a degree of roughness of the road surface traveled by the vehicle;
vehicle-speed detecting means (30c) for detecting vehicle speed (V);
cornering detecting means (42) for detecting cornering of the vehicle;
entrance determining means (145, 146) for determining whether or not the vehicle has entered a turn around a comer (T) in accordance with output of the cornering detecting means;
normal-travel adjustment calculating means (132, 133 - 137, 142, 143, 147, 142a, 148a) for, when the vehicle approaches a comer and the degree of roughness detected by the roughness state detecting means does not correspond to a good road surface, calculating a normal-travel adjustment for damping force of the suspension means on the basis of the detected degree of roughness; and
bad-road adjustment calculating means (132, 133 - 137, 142, 143, 145a) for, when the detected degree of roughness remains other than that of a good road surface upon entry of the vehicle into the turn around the comer, calculating a bad-road adjustment amount for damping force of the suspension means on the basis of the detected degree of roughness, the detected vehicle speed and comer information regarding the comer from the navigation system; and
output means (150, 60a - 60d) for outputting to the suspension means a normal-travel adjustment calculated by the normal-travel adjustment calculating means or a bad-road adjustment calculated by the bad-road adjustment calculating means.

Accordingly, upon entry of the vehicle into the turn around the comer, when the detected degree of roughness remains at a level or levels not corresponding to a good road surface, the damping force of the suspension means is changed from that corresponding to the normal-travel adjustment to that corresponding to a bad-road adjustment.

The above embodiment may also include the previously described good-road adjustment calculating means.

Optionally, one or all of the adjustment calculating means may extract a roughness state component at a predetermined frequency from the signal for degree of roughness output by the roughness state detecting means and calculate the adjustment for damping force of the suspension means on the basis of that roughness state component.

In yet another embodiment, the vehicular suspension control system of the present invention is installed in a vehicle also equipped with a navigation system and includes:

suspension means (S1 - S4) interposed between a wheel support member (R1, R2) and the frame (B) of the vehicle to provide a damping force;
slip state detecting means (41a - 41d) for detecting slip state of a road surface traveled by the vehicle;
vehicle-speed detecting means (30c) for detecting vehicle speed;
cornering detecting means (42) for detecting cornering of the vehicle;
entrance determining means (145, 146) for determining whether or not the vehicle has entered into a turn around the comer (T) based on output of the cornering detecting means;
good-road adjustment calculating means (132, 133 - 137, 142, 143b, 147b, 143c, 147c) for, when the vehicle approaches the comer, in the case where the slip state detected by the slip state detecting means corresponds to a good road surface, calculating a good-road adjustment for damping force of the suspension means on the basis of the detected slip state, the detected vehicle speed and comer information regarding the comer from the navigation system;
bad-road adjustment calculating means (132, 133 - 137, 142, 143b, 145b) for, when the vehicle approaches the comer and the slip state detected by the slip state detecting means does not correspond to that of a good road surface, upon entrance of the vehicle into the turn around the comer calculating a bad-road adjustment for damping force of the suspension means on the basis of the detected slip state, the detected vehicle speed and comer information regarding the comer from the navigation system; and
output means (150, 60a - 60d) for outputting to the suspension means the good-road adjustment calculated by the good-road adjustment calculating means or the bad-road adjustment calculated by the bad-road adjustment calculating means.

Thus, in this latter embodiment, when the vehicle approaches the comer, if the slip state of the road surface corresponds to a good road surface, a good-road adjustment is calculated on the basis of the detected slip state corresponding to the good road surface, the detected vehicle speed and the comer information, and is output to the suspension means. On the other hand, if the slip state of the road surface does not correspond to a good road surface, a bad-road adjustment is calculated on a basis of the detected slip, the detected vehicle speed and the comer information, responsive to a determination that the vehicle has entered the turn around the comer, and is output to the suspension means.

As the vehicle approaches the comer, if the slip state of the road surface changes from a slip state corresponding to a good road surface to a slip state not corresponding to a good road surface, the damping force of the suspension means is changed from that for a good road surface to that for a bad road surface when entering the comer. Thus, in travel around the comer, the vehicle maintains favorable stability.

Those embodiments including a slip state detecting means, instead of the bad-road adjustment means, may have a normal-travel adjustment amount calculating means (132, 133 - 137, 142, 143, 147b, 142b, 148b) for, in the case where the slip state detected by the slip state detecting means does not correspond to a good road surface, calculating a normal-travel adjustment for damping force of the suspension means on the basis of the detected slip state. In such an embodiment, when the vehicle approaches a comer during travel, the detected slip state may initially correspond to that of a good road surface, with control in accordance with an adjustment calculated on the basis of the detected slip state, the detected vehicle speed and the comer information. However, if the slip state of the road surface thereafter changes so that it no longer corresponds to that of a good road surface, a normal-travel adjustment is calculated for the damping force of the suspension means on the basis of the detected slip state, and is output to the suspension means.

Conversely, when the vehicle approaches the comer, in the case where the slip state of the road surface initially does not correspond to that of a good road surface with control in accordance with the normal-travel adjustment calculated on the basis of the detected slip state, alone, or in combination with other detected conditions, and thereafter, the slip state of the road surface changes to correspond to that of a good road surface, a good-road adjustment is calculated for the damping force on the basis of the detected slip state, the detected vehicle speed and the comer information, and is output to the suspension means.

In another embodiment, the vehicular suspension control system of the present invention is installed in a vehicle also equipped with a navigation system and includes:

suspension means (S1 - S4) interposed between a wheel support member (R1, R2) and the frame(B) of the vehicle to provide a damping force;

slip state detecting means (41a - 41d) for detecting a slip state of a road surface traveled by the vehicle;
vehicle-speed detecting means (30c) for detecting vehicle speed (V);
cornering detecting means (42) for detecting cornering of the vehicle;
entrance determining means (145, 146) for determining whether or not the vehicle has entered into a turn around the comer (T) based on output of the cornering detecting means;
normal-travel adjustment calculating means (132, 133 - 137, 142, 143, 147b, 142b, 148b) for, when the vehicle approaches the comer, in the case where the slip state detected by the slip state detecting means does not correspond to a good road surface, calculating a normal-travel adjustment for damping force of the suspension means on the basis of the detected slip state;
bad-road adjustment amount calculating means (132, 133 - 137, 142, 143b, 145b) for, when the slip state detected by the slip state detecting means continues to not correspond to that of a good road surface upon entry of the vehicle into the turn around the comer, calculating a bad-road adjustment amount for damping force of the suspension means on the basis of the detected slip state, the detected vehicle speed and comer information regarding the comer from the navigation system; and
output means (150, 60a - 60d) for outputting to the suspension means a normal-travel adjustment amount calculated by the normal-travel adjustment calculating means or a bad-road adjustment calculated by the bad-road adjustment calculating means.

Accordingly, upon entry of the vehicle into the turn around the comer, in the case that the traveling road surface maintains a slip state which does not correspond to a good road surface, the damping force of the suspension means is changed to that corresponding to a bad-road adjustment from the normal-travel adjustment.
In the embodiment utilizing slip state detection means, each of the adjustment calculating means may determine a degree of slip at a predetermined frequency from the slip state detected by the slip state detecting means and calculate the adjustment amount for damping on the basis of the determined degree of slip.
In another aspect, the present invention provides a method for control of suspension means in a vehicle equipped with a navigation system, which method includes:

detecting current position of the vehicle;
detecting vehicle speed;
detecting a degree of roughness of the road surface at the detected current position of the vehicle as the vehicle approaches a comer, as corresponding to either a good road surface or a bad road surface;
in approaching a comer, responsive to detection of a degree of roughness corresponding to a good road surface, calculating a good-road adjustment based on the detected degree of roughness, the detected vehicle speed and comer information regarding the comer from the navigation system;
determining entrance of the vehicle into a turn around the comer;
calculating a bad-road adjustment on the basis of the detected degree of roughness, the detected vehicle speed and the comer information responsive to detection of a degree of roughness corresponding to a bad road surface and determination of entrance of the vehicle into the turn around the comer; and
outputting to suspension means of the vehicle the good-road adjustment or the bad-road adjustment; and
controlling damping force of the suspension means in accordance with the output adjustment.

In this manner, the suspension means is controlled in accordance with the good-road adjustment or the bad-road adjustment, both of which are calculated on the basis of the detected degree of roughness, the detected vehicle speed and the comer information.
When the vehicle approaches a comer, in the case that the detected degree of roughness changes from one corresponding to a good-road surface state to a degree of roughness not corresponding to a good-road surface state, the damping force of the suspension means is controlled in a manner corresponding to bad-road adjustment when entering the turn around the comer.
Another embodiment of the method of the present invention includes:

detecting current position of the vehicle;
detecting vehicle speed;
detecting a degree of roughness of the road surface at the current position of the vehicle as the vehicle approaches a comer, as corresponding to either a good road surface or a normal road surface;
in approaching a comer, responsive to detection of a degree of roughness of road surface at the current position corresponding to a good road surface, upon entry of the vehicle into the turn around the comer calculating a good-road adjustment on the basis of the detected degree of roughness, the detected vehicle speed and comer information from the navigation system;

calculating a normal-travel adjustment, responsive to detection of a degree of roughness no longer corresponding to a good road surface, on the basis of the detected degree of roughness;

outputting to the suspension means the good-road adjustment amount or the normal-travel adjustment; and

controlling damping force of the suspension means of the vehicle in accordance with the output adjustment.

In this latter embodiment, when the vehicle approaches a comer, in the case that the road surface changes from a degree of roughness corresponding to a good-road surface state to one no longer corresponding to a good-road surface, the damping force of the suspension means is changed from control in accordance with the good-road adjustment to control in accordance with the normal-travel adjustment.

Conversely, when the vehicle approaches a comer with suspension control in accordance with the normal-travel adjustment, if the degree of roughness of the road surface changes from a state which does not correspond to a good-road surface state to one which does correspond to a good-road surface, control of the damping force of the suspension means is changed to control in accordance with the good-road adjustment.

In yet another embodiment, the control method combines the calculating and utilization of the normal-travel adjustment with calculating and utilization of the bad-road adjustment, optionally also with calculating and utilization of the good-road adjustment.

In yet another embodiment the vehicular suspension control method of the present invention includes:

detecting current position of the vehicle;

detecting vehicle speed;

detecting a slip state of the road surface at the detected current position as either a good-road state or a bad-road state;

in approaching a comer, responsive to detection of a slip state of the road surface at a current position which corresponds to a good road surface, calculating a good-road adjustment on the basis of the detected slip state, the detected vehicle speed and comer information from the navigation system;

determining whether or not the vehicle has entered a turn around the comer;

as the vehicle approaches the comer, responsive to detection of a slip state at the current position of the vehicle which does not correspond to a good road surface, upon entry of the vehicle into the turn around the comer, calculating a bad-road adjustment on the basis of the detected slip state, the detected vehicle speed and the comer information of from the navigation system; and

outputting to the suspension means the good-road adjustment or the bad-road adjustment; and

controlling the suspension means in accordance with the output adjustment.

In approaching a comer, when the detected slip state changes from a slip state corresponding to a good-road surface to a slip state which no longer corresponds to a good-road surface, control of the damping force of the suspension means is changed from that in accordance with the good-road adjustment to that in accordance with the bad-road adjustment.

The calculation of a normal-travel adjustment for a detected slip state which does not correspond to a good road surface, based on the detected slip state may be included in the foregoing embodiment of the method or may be substituted for either the good-road adjustment calculation or the bad-road adjustment amount calculation.

The reference numerals within the parentheses denote a corresponding relationship with the various means described in the ensuing embodiments.

BRIEF DESCRIPTION OF THE DRAWINGS

Fig. 1 is a block diagram showing a first embodiment of an automotive suspension control system according to the present invention.

Fig. 2 is a schematic diagram of the suspension units on the automobile.

Fig. 3 is a side view of one suspension unit of Fig. 2.

Fig. 4 is a schematic circuit diagram of the suspension unit.

Fig. 5 is a flowchart of a navigation control program executed by a computer of the navigation system of Fig. 1.

Fig. 6 is a flowchart of the navigation basic routine (step 100 in Fig. 5).

Fig. 7 is a flowchart of the traveling environment recognition routine (step 110 in Fig. 5).

Fig. 8 is a flowchart of a suspension control program executed by a microprocessor of the electronic control unit in Fig. 1.

Fig. 9 is a flowchart of a degree of roughness setting routine (step 130 in Fig. 8).

Fig. 10 is a flowchart of a damping level determination routine (step 140 in Fig. 8).

Fig. 11 is another flowchart of another damping level determination routine (step 150 in Fig. 8).

Fig. 12 is a schematic view of a road including a curve-starting point.

Fig. 13 is a graph showing, for a degree of roughness P = Lo, the relationship between a damping level Cn and an estimated lateral G, in the first embodiment.

Fig. 14 is a graph showing, for a roughness degree P = Mi, the relationship between a damping level Cn and an estimated lateral G, in the first embodiment.

Fig. 15 is a graph showing, for a degree of roughness P = Hi, the relationship between a damping level Cn and an estimated lateral G, in the first embodiment.

Fig. 16 is a graph of the relationship between degree of opening β of the electromagnetic reduction valve and damping level Cn.

Fig. 17 is a block diagram of a second embodiment of the present invention.

Fig. 18 is a flowchart of a suspension control program executed by the microprocessor of the electronic control unit in Fig. 17.

Fig. 19 is a flowchart of the slip-degree determination routine (step 130a in Fig. 18).

Fig. 20 is a flowchart of the damping level determination routine of Fig. 18.

Fig. 21 is a flowchart of a continuation of the damping level determination routine of Fig. 20.

Fig. 22 is a graph, for a slip degree SP = Lo, of damping level Cn versus estimated lateral G, in the second embodiment.

Fig. 23 is a graph, for a slip degree SP = Mi, of damping level Cn versus estimated lateral G, in the second embodiment.

Fig. 24 is a graph, for a slip degree SP = Hi, of damping level Cn versus estimated lateral G, in the second embodiment.

Fig. 25 is a graph of detected acceleration G versus time showing frequency and acceleration component G'.

## DESCRIPTION OF THE PREFERRED EMBODIMENTS

Embodiments of the present invention will now be explained in accordance with the drawings.

First Embodiment

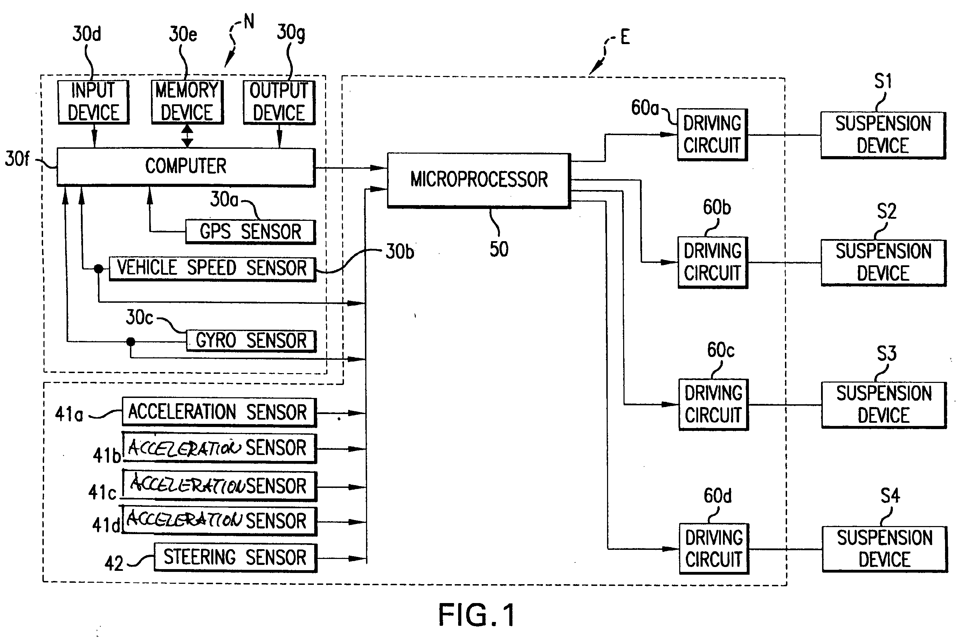

Fig. 1 shows one example of a suspension control system wherein suspension units S1 - S4 are controlled by an electronic control unit E.

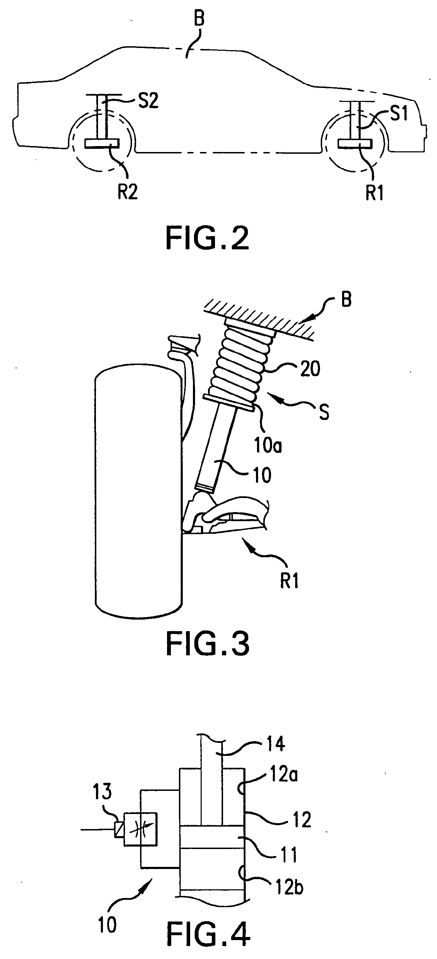

The suspension unit S1 is interposed between a wheel support element R1, provided at a point close to the right-sided front wheel of the automobile and a corresponding portion of the frame B of the vehicle, as shown in Fig. 2. The wheel support element, to which the lower end of the shock absorber attaches, may be different for front and rear wheels and for different vehicles, e.g. axle housing, lower suspension arm, steering knuckle, bearing housing or motor housing.

The suspension unit S1 has a damper 10 and a coiled spring 20, as shown in Fig. 3. The damper 10 at its lower end is supported on the wheel support element R1. The coiled spring 20 is coaxially fitted over the exterior of the damper 10, extending from a flange 10a provided at an axially intermediate point on the exterior surface of the damper 10 to the frame B. The coiled spring 20 thus biases upward the body B.

The structure and function of the damper 10 is illustrated by the schematic circuit shown in Fig. 4. The damper 10 has a piston 11 and a hydraulic cylinder 12. The piston 11 is axially slidably received within the cylinder 12, and partitions the interior of the cylinder 12 into upper and lower hydraulic chambers 12a, 12b.

The damper 10 also has an electromagnetic reduction valve 13. The electromagnetic reduction valve 13 allows for communication between hydraulic chambers 12a, 12b in accordance with the size of a variable opening therein. A piston rod 14 extends from the piston 11 through the hydraulic chamber 12a and its upper end is coupled to the frame B.

In the damper 10, when the piston 11 slides up, the operating oil within the hydraulic chamber 12a passes through the electromagnetic reduction valve 13 and flows into the hydraulic chamber 12b. Conversely, when the piston 11 slides down, the operating oil within the hydraulic chamber 12a passes through the electromagnetic reduction valve 13 and flows into the hydraulic chamber 12a. In the present embodiment, the electromagnetic reduction valve 13 regulates the amount of flow of operating oil between the hydraulic chambers 12a, 12b, according to the size of its opening. As the opening of the electromagnetic reduction valve 13 is decreased (or increased) the resistance to flow of operating oil through the electromagnetic reduction valve 13 is increased (or decreased) with a corresponding change to damping force of the damper 10 and ultimately the suspension S1.

Likewise, the suspension unit S2 is interposed between a wheel support element R2 provided at a point close to the right-side rear wheel of the automobile and a corresponding point on the frame B. The suspension unit S3 (see Fig. 1) is interposed between a wheel support frame at a point close to the left-sided rear wheel of the automobile and a corresponding point on the frame B. Likewise, the suspension unit S4 (see Fig. 1) is interposed between a wheel support element at a point close to the left-side rear wheel and a corresponding point on the frame B.

These suspension units S2 - S4 respectively have dampers 10 and coiled springs 20, similar to the suspension unit S1. The suspension unit S2 - S4 function similar to the suspension unit S1, owing to the damper 10 and the coiled spring 20. Incidentally, the front wheels of the automobile are the drive wheels in the illustrated embodiment.

Next, the configuration of the electronic control unit E will be explained with reference to Fig. 1, in terms of its relationship with a navigation system N. The navigation system N has a GPS sensor 30a, a gyro sensor 30b and a vehicle speed sensor 30c. The GPS sensor 30a detects a current position of the automobile, on the basis of the radio signals from a plurality of stationary satellites. The gyro sensor 30b detects an angle of rotation of the automobile about a perpendicular axis passing the center of gravity of the automobile. The vehicle-speed sensor 30c detects traveling speed of the automobile.

The navigation system N has an input unit 30d, a storage unit 30e, a computer 30f and an output unit 30g. The input unit 30d is operable to input required information into the computer 30f. The storage unit 30e is stored with, as a database, serial map data to be read out by the computer 30f.

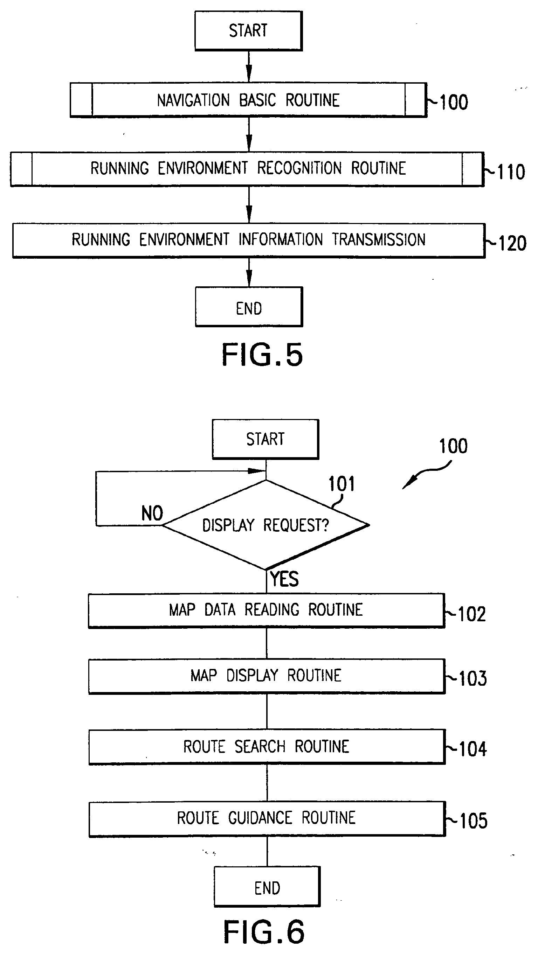

The computer 30f executes a navigation control program according to the flowcharts shown in Figs. 5 to 7. The computer 30f, during execution of the navigation control program, provides route guidance for the driver, on the basis of information from the input unit 30d, data stored in the storage unit 30e, and outputs of the GPS sensor 30a, gyro sensor 30b and vehicle-speed sensor 30c. The output unit 30g displays information required for guidance of the automobile, under control of the computer 30f.

The electronic control unit E has acceleration sensors 41a - 41d, a steering sensor 42, a microprocessor 50, and drive circuits 60a - 60d, as shown in Fig. 1.

The acceleration sensors 41a - 41d are respectively provided on the frame B, at positions close to the suspension units S1 - S4. These acceleration sensors 41a - 41d respectively detect acceleration G acting vertically on the automobile. The steering sensor 42 detects a steering angle as angle of rotation from a neutral position to a steering direction of the steering wheel.

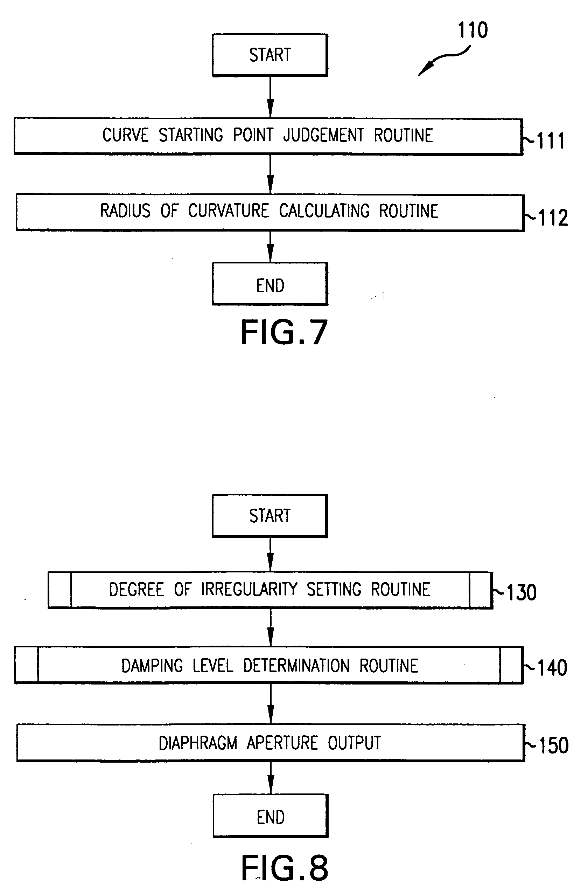

The microprocessor 50 executes a suspension control program, according to the flowcharts shown in Figs. 8 to 11. The microprocessor 50, during execution of the suspension control program, determines a damping force for each suspension unit S1 - S4, on the basis of input from the computer 30f of the navigation system N and from the vehicle-speed sensor 30c, acceleration sensors 41a - 41d and steering sensor 42.

The drive circuits 60a - 60d drive the electromagnetic reduction valves 13 of the suspension units S1 - S4, under control of the microprocessor 50.

In the first embodiment configured as described above, when the computer 30f of the navigation system N starts execution of the navigation control program according to the flowchart of Fig. 6, the basic navigation routine 100 (of Fig. 5) required for route guidance is executed as follows.

First, when a request is made for a desired map by operation of the input unit 30d, the determination in step 101 (Fig. 6) is YES. Then, in step 102, map data for the desired map is read out of the storage unit 30e. Thereafter, the desired map is displayed by the output unit 30g on the basis of the map data.

Then, in step 104, a route search is executed. This route search utilizes outputs of the GPS sensor 30a and gyro sensor 30b and destination input through the input unit 30d. Then, at step 105, route guidance is provided for the automobile, based on the results of the route search, assisting the driver in following the guidance route determined by search.

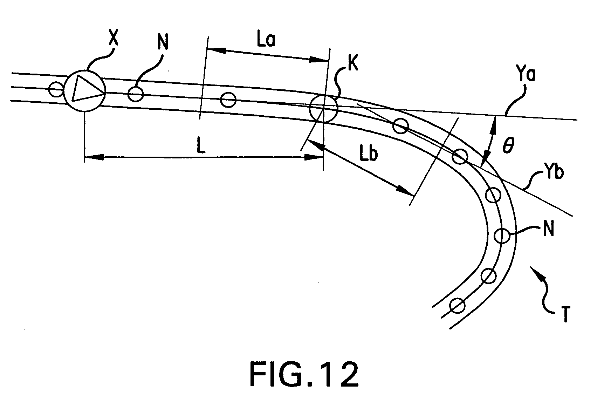

When execution of the navigation basic routine 100 is ended, a travel-environment recognition routine 110 (see Figs. 5 and 7) is executed as in the following manner. It is first assumed, as shown in Fig. 12, that a point has been set (hereinafter, curve starting point K) at which the road traveled starts to curve at a curve angle T with a straight road in the traveling direction of the automobile (hereinafter, also referred to as comer T). A plurality of nodes N, included in the map data are utilized as reference points for calculating the radius of curvature Ra of the comer T.

In step 111 (Fig. 7), the curve starting point K is determined as follows. Firstly, an angle defined between a straight line Ya and a straight line Yb is calculated as a cornering angle $\theta$, for each node present in the direction of travel of the automobile, as shown in Fig. 12. Here, the straight line Ya is a straight line passing between nodes adjacent a point a predetermined distance La backward from the subject node (a node for which cornering angle $\theta$ is to be calculated (here (K)). The straight line Yb is a straight line passing between nodes adjacent a point a predetermined distance Lb forward from the subject node.

The first node for which a cornering angle $\theta$ is greater than a predetermined angle is taken as the curve starting point K.

Then, at step 112, the radius of curvature Ra of the comer T is calculated for each node N, as a radius of a circle passing through three points in total, including the two nodes positioned immediately forward and backward of the subject node N.

The minimum of the radii of curvature thus calculated, is taken as the radius of curvature Ra of the comer T.

After ending the process with completion of at the step 112 as above, a travel-environment information routine is executed as step 120 in Fig. 5. In this routine, the electronic control unit E obtains information for the curve starting point K determined in the travel-environment recognition routine 110 and the radius of curvature Ra of the comer T.

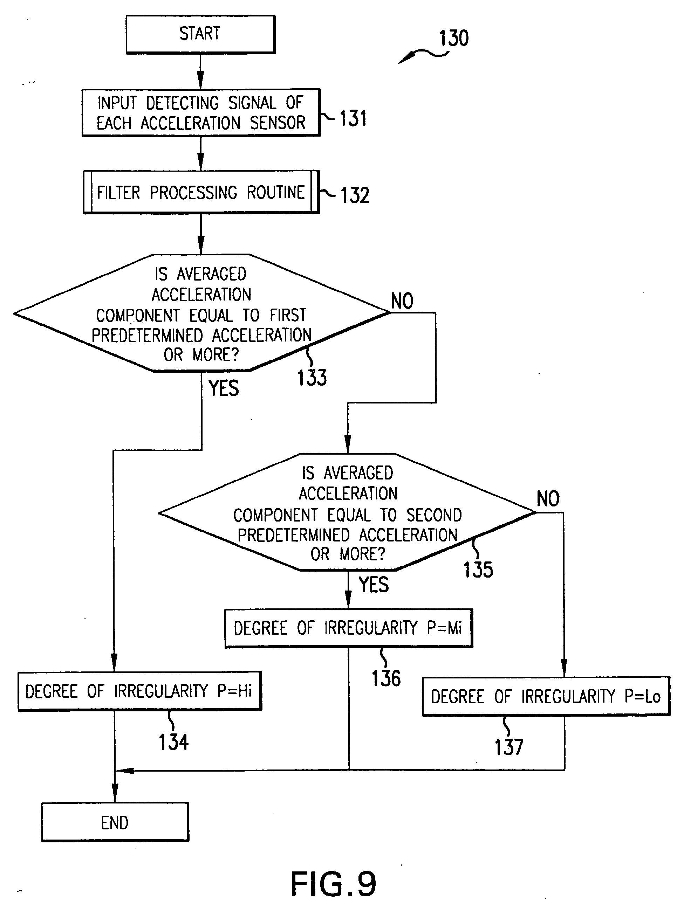

The microprocessor 50 of the electronic control unit E executes the roughness-degree setting routine 130 of Fig. 9 (step 130 in the flowchart of Fig. 8) utilizing the acceleration signals from the acceleration sensors 41a - 41d input in step 131.

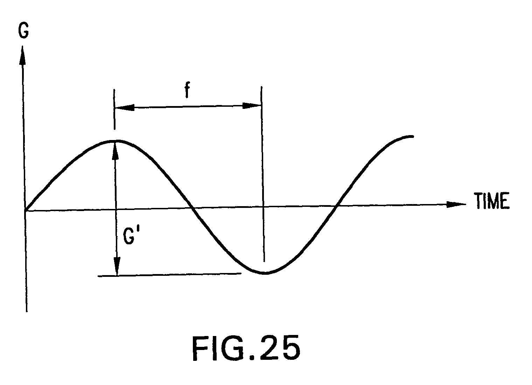

Next, in step 132, a filter routine is executed. In this filter routine, the acceleration signals are sampled, acceleration components G' at a predetermined frequency are extracted and the extracted acceleration components are averaged. See Fig. 25.

In the sampling process, the acceleration signals are sampled chronologically in order, e.g. ten at one time, from each of the acceleration sensors 41a-41d, in sequence. On the basis of the data thus sampled, acceleration components corresponding to a frequency within a range of 10 (Hz) - 20 (Hz) are extracted from the sampling data of the acceleration sensors 41a-41d, in sequence. All the acceleration components thus extracted are averaged to obtain an average acceleration component as an arithmetic mean.

In this embodiment, the reason for taking acceleration components corresponding to a frequency in the range of 10 (Hz) - 20 (Hz) is because of correspondence of such frequencies to a degree of roughness of the traveled road surface which is uncomfortable for the occupants. The above average acceleration component is a component averaged for the suspension units S1 - S4 of the automobile.

Next, at step 133, it is determined whether or not the above average acceleration component is equal to or greater than a first predetermined acceleration. Here, the first predetermined acceleration corresponds to the worst degree of roughness of the travelled road surface, which in this embodiment is set at 2.0 G, for example.

In the case where the relevant average acceleration component is equal to or higher than the first predetermined acceleration, the determination at step 133 is YES. Then, the degree of roughness is set as P = Hi at step 134. Here, the degree of roughness P represents a degree of roughness of the road surface traveled by of the automobile while the degree of roughness P = Hi represents the worst case degree of roughness.

In the case where the determination at step 133 is NO, it is determined at step 135 whether or not the average acceleration component is equal to or greater than a second predetermined acceleration. Here, the second predetermined acceleration corresponds to a moderate state of roughness rather than the worst case roughness state corresponding to the first predetermined acceleration, which in this embodiment is set at 1.0 G, for example.

When the relevant average acceleration component is equal to or greater than the second predetermined acceleration, the determination is YES in step 135. Then, the degree of roughness is set as P = Mi in step 136. Here, the degree of roughness P = Mi represents that degree of roughness of the travelled road surface more moderate than the worst case degree of roughness represented as P = Hi.

When the determination is NO in step 135, the degree of roughness is set as P = Lo in step 137. The degree of roughness represented by P = Lo is that roughness of the road surface traveled by the automobile which is the most moderate degree (e.g. corresponding to a nearly flat road surface). As the degree of roughness P changes from P = Hi, to P = Mi, to P = Lo, the potential affect of the road surface on the steering stability and riding comfort decreases.

When the degree of roughness setting routine 130 is completed, a damping-level determination routine 140 (Fig. 8, Figs. 10 and 11) is executed. In the execution of the damping-level determination routine 140, it is determined at step 141 whether or not the flag F is set as F = 1. A flag F = 1 means that the microprocessor 50 is executing cornering control while a flag F = 0 means that the microprocessor 50 is not currently executing cornering control.

When the flag F is set as F = 0 in step 141, cornering control is not being executed, and the determination in step 141 is NO. In the next step 142, a current position X of the automobile is obtained from the computer 30f of the navigation system N, based on output of the GPS sensor 30a. The distance L from the detected current position X of the automobile to the curve starting point K is calculated and a determination is made as to whether or not the calculated distance L is less than a predetermined distance. If the calculated distance L is not less than the predetermined distance, the determination in step 142 is NO.

[0074] In step 142a, damping level Cn is determined to be Cn = 2 which represents the normal travel damping level of the automobile. Here, the damping level Cn is a level common for the aperture openings of the electromagnetic reduction valves 13 and which corresponds to the damping force of the suspension unit S1 - S4.

On the other hand, in the case that the distance L is less than the predetermined distance, the determination in step 142 is YES. In the next step 143, it is determined whether or not the degree of roughness P is P = Lo. If the degree of roughness is P = Lo (see step 137 in Fig. 9), the roughness of the road surface the automobile is traveling is the most moderate case. Accordingly, the determination is YES in step 143. Then, in step 143a, determination of damping-level Cn which is common to the suspension units S1 - S4 is executed.

At first, estimated lateral G is calculated on the basis of the vehicle speed V and the radius of curvature Ra of a comer T, by use of the following Equation I. Incidentally, estimated lateral G is a horizontal estimated acceleration that the automobile will undergo upon turning the comer T.

$$\text{I. Estimated lateral G} = \{(V \times Vr)^2\} / Ra$$

Vr in the Equation I represents a deceleration-correcting coefficient. The deceleration-correcting coefficient Vr is an assumed correction coefficient for correcting deceleration from a vehicle speed V at the current position X to vehicle speed of the automobile in travel around the comer T. In the present embodiment, it is set at Vr = 0.8 - 0.9, for example. Incidentally, the Equation I is stored in the ROM of the microprocessor 50.

The damping level Cn at a setting of a degree of roughness P = Lo (see step 137 in Fig. 9) is determined by use of estimated lateral G as follows, on the basis of a predetermined relationship (data map) shown in Table 1 below.

Table 1

| Estimated Lateral G | Damping Level Cn |
|---------------------|------------------|
| G3 < G | Cn = 7 |
| G2<G≤G3 | Cn = 6 |
| G1<G≤G2 | Cn = 5 |
| G≤G1 | Cn = 4 |

In the data map of Table 1, the damping level Cn for the case of a degree of roughness P = Lo is specified in relationship to an estimated lateral G set to increase in the order of G = 1, to G = 2, to G = 3. The data of Table 1 is prestored in the ROM of the microprocessor 50, together with the data map of table 2 referred to later.

Then, for example, when the estimated lateral G is greater than G1 and equal to or smaller than G2, the damping level is determined to be Cn = 5 on the basis of the data of Table 1.

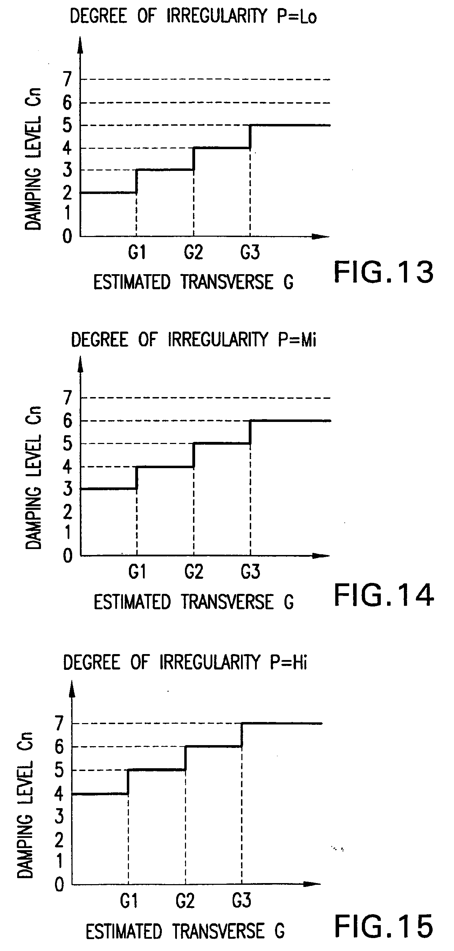

The damping level Cn increases with increase in estimated lateral G, as shown in Fig. 13. Further, as the speed V of the automobile turning the comer becomes higher and as the radius of curvature Ra of the comer T becomes smaller, the estimated lateral G becomes greater.

When a damping level Cn common to the suspension units S1 - S4 is determined in step 143a as described above, the flag F is set as F = 1 in the next step 144.

The determination in step 143 is NO unless the degree of roughness is P = Lo. Then, when the steering sensor 42 indicates approximately the neutral position, the automobile has not commenced cornering. Accordingly, the determination is NO in step 145. Due to this, the damping level Cn is determined as Cn = 2 in step 142a as the normal damping level of the automobile, similar to the above.

In step 145, when the automobile has commenced cornering, the determination is YES, on the basis of the signal output by the steering sensor 42. Then, in step 145a, a process of determining a damping level Cn common to the suspension units S1 - S4, is executed as follows.

First, an estimated lateral G is calculated on the basis of vehicle speed V of the automobile and radius of curvature Ra of the comer T, by use of the foregoing Equation I. Damping level Cn is determined by use of an estimated lateral G and the degree of roughness P, as follows, on the basis of the data map shown in Table 2 below.

## Table 2

| Roughness Degree P<br><br>Estimated Lateral G | P = Hi | P = Mi |
|---|---|---|
| G3 < G | Cn = 5 | Cn = 6 |
| G2 < G ≤ G3 | Cn = 4 | Cn = 5 |
| G1 < G ≤ G2 | Cn = 3 | Cn = 4 |
| G ≤ G1 | Cn = 2 | Cn = 3 |

In this data map of Table 2, damping level Cn is specified in relation to degree of roughness P and estimated lateral G.

For example, when the degree of roughness P = Hi (see step 134 in Fig. 9), when the estimated lateral G is greater than G1 and equal to or less than G2, the damping level is determined to be Cn = 3 on the basis of the data map of Table 2. When the degree of roughness is P = Mi (see step 136 in Fig. 9), when the estimated lateral G is greater than G1 and equal to or less than G2, the damping level is set as Cn = 4 on the basis of the data map of Table 2.

In the relationship between damping level Cn, estimated lateral G, and degree of roughness P in the data map of Table 2, damping level Cn is specified to increase with increase in the estimated lateral G, as shown in Figs. 14 and 15. The damping level Cn is specified to decrease as the degree of roughness P worsens, e.g. P = Mi to P = Hi, as shown in Figs. 14 and 15. This means that, as the average acceleration component increases, the degree of roughness deteriorates and the damping level Cn decreases.

After determining a damping level Cn common to the suspension units S1 - S4 in step 145a as above, the flag F is set as F = 1 in the next step 144.

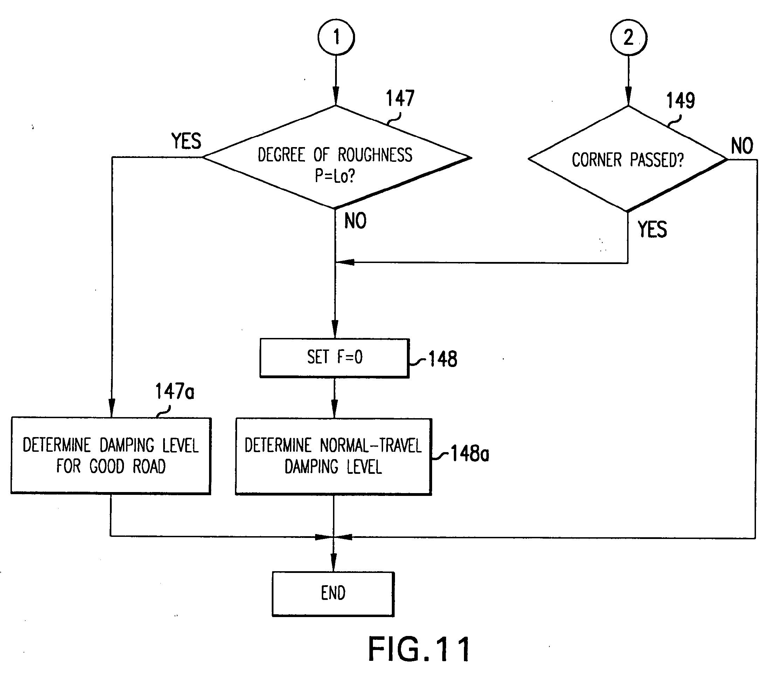

If the flag F is F = 1 when execution of the damping-level determination routine 140 reaches step 141, the cornering control is in effect and hence, the determination is YES in step 141. Then, when the steering sensor 42 has an output representing approximately the neutral position, the automobile has not yet commenced cornering and, hence, the determination is NO in step 146. Then, in step 147 of Fig. 11, it is determined whether or not the degree of roughness is P = Lo.

When the degree of roughness is P = Lo (see step 137 of Fig. 9), the determination is YES in step 147. In the next step 147a, a damping level Cn common to the suspension units S1 - S4 is determined by applying an estimated lateral G to the data map of Table 1, similar to step 143a.

On the other hand, when the degree of roughness is not P = Lo, the determination is NO in step 147 and the flag is set as F = 0 in step 148. Then, the damping level is determined in step 148a as Cn = 2 for normal travel of the automobile, similar to step 142a.

Meanwhile, when the damping-level determination routine 140 reaches step 146, if the automobile has commenced cornering, the determination is YES on the basis of the output of the steering sensor 42. Then, in step 149 of Fig. 11, it is determined whether or not the automobile has passed the comer T. Immediately after the determination YES in step 146, a determination NO is made in step 149 on the basis of output of gyro sensor 30b from the computer 30f.

In accordance with previous determinations, the suspension control program proceeds to the end of the damping-level determination routine 140 without determining a new damping level Cn. This means maintaining the damping level Cn which had been previously determined by taking into account the road surface degree of roughness immediately after the automobile has commenced cornering (see determination YES at step 145) or immediately before it commenced cornering (see determination YES in step 147). The damping level Cn is then held until a determination of YES in step 149.

Thereafter, when the automobile completes turning the comer T, a determination YES is made in step 149, on the basis of output of the gyro sensor 30b from the computer 30f, thus setting the flag as F = 0 in the next step 148.

Then, in step 148a, a damping level Cn is set as Cn = 2 for normal travel of the automobile, similar to step 142a.

When the execution of the damping-level determination routine 140 (see Figs. 8, 10 and 11) has been completed, an aperture opening is output in the next step 150 (see Fig. 8). In step 150, the electromagnetic reduction valves 13 of the suspension units S1 - S4 have their apertures adjusted in accordance with the damping level determined in step 142a (or 148a), 143a (or 147a) or 145a or by NO in step 149.

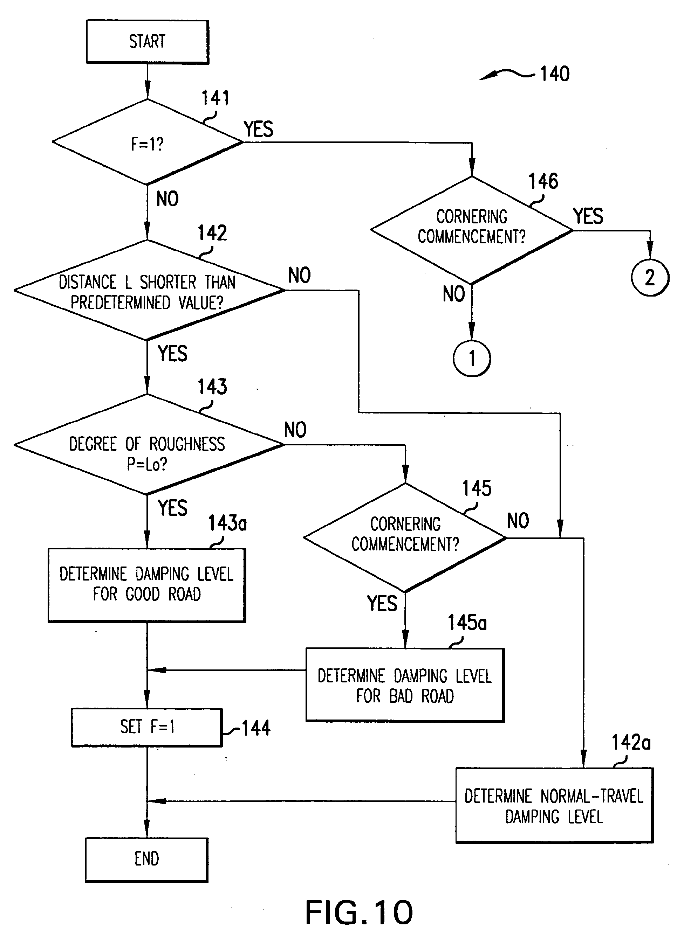

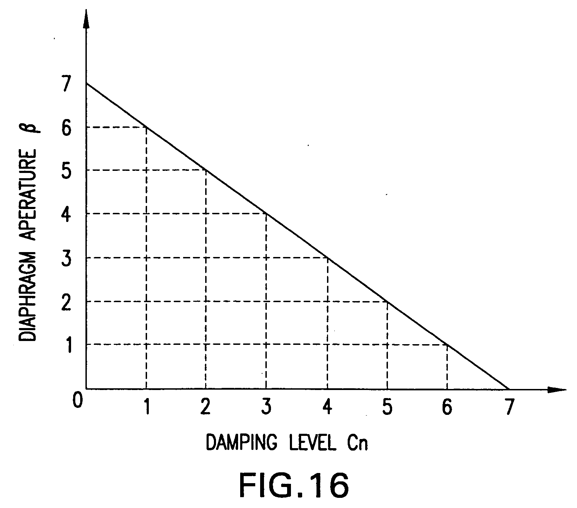

In the case where the determination is NO in step 142, because the distance L of the automobile to the comer T is not smaller than the predetermined value, and damping level Cn is set as Cn = 2 in step 142a (see Fig. 10), the aperture opening β of the electromagnetic reduction valve 13 of each suspension unit S1 - S4 is adjusted to β =5 in step 150 on the basis of the damping level Cn = 2, and the relationship between aperture opening β and damping level Cn shown in Fig. 16. In this first embodiment, the diaphragm aperture opening β increases with a decrease of damping level Cn, as shown in Fig. 16.

In the case where the aperture opening β is determined as β = 5, the aperture opening β in step 150 is output as data for β = 5 to the drive circuits 60a - 60d. Responsive to this output, the drive circuits 60a - 60d adjust the apertures of the electromagnetic reduction valves 13 to β = 5.

By adjustment of the aperture openings to as high as β = 5, each electromagnetic reduction valve 13 greatly increases the amount of flow of operating oil between the hydraulic chambers 12a, 12b, thereby greatly reducing the resistance to flow of operating oil. In this manner, when the automobile is traveling straight at a point further from the comer T than the predetermined value, the damping force of the suspension unit S1 - S4 is made smaller with emphasis on driving comfort, in a manner suited for the normal travel of the automobile.

When the distance L of the automobile to the comer T becomes smaller than the predetermined value (YES in step 142), the determination is YES in step 143 on the basis of degree of roughness P = Lo (see step 137 in Fig. 9), and after the damping level Cn has been determined in step 143a, the aperture opening degree β is determined in step 150, based on the damping level Cn from the Cn - β graph (data map) of Fig. 16, as follows.

For example, in the case where the damping level Cn is determined as Cn = 6, based on an estimated lateral G greater than G2 but equal to or smaller than G3, the aperture opening degree of β of each electromagnetic reduction valve 13 is set as β = 1 in step 150 based on application of the damping level to the β-Cn graph of Fig. 16.

The aperture opening β thus determined is output as data in step 150 to the drive circuits 60a - 60d. Based on the output, the damping force of each suspension unit S1 - S4 is controlled as follows.

For example, where the aperture opening is output as data representative of β = 1 to the drive circuits 60a - 60d in step 150, the drive circuits 60a - 60d adjust the electromagnetic reduction valves 13 to reduce their aperture openings to β = 1, whereby the electromagnetic reduction valves 13 greatly reduce the amount of flow of operating oil between the hydraulic chambers 12a, 12b by greatly increasing the resistance to flow of operating oil, thereby greatly increasing the damping force of each suspension unit S1 - S4.

By thus adjusting the damping force of the suspension units S1 - S4 during straight travel after the distance L to the comer T has become less than the predetermined distance, it is possible to control the adjustment with emphasis placed on steering stability in cornering, immediately before the automobile enters the turn around the comer. Moreover, because the road surface has the most moderate degree of roughness, i.e., P = Lo (see step 137 in Fig. 9), the automobile is comfortable to drive in straight travel after the distance L to the comer T has become less than the predetermined distance.

If the flag is set as F = 1 in step 144 after the process of step 143a, in the next control cycle the determination will be YES in step 141, leading a determination in step 146. However, because the automobile is in traveling straight in the present stage, the determination is NO in step 146, based on output of gyro sensor 30b from the computer 30f.

At this time, in the case where the most recently detected degree of roughness P is P = Lo in step 137, the damping level Cn is determined in step 147a on the basis of a procedure similar to that of step 143a. Accordingly, even in further straight travel of the automobile after the distance L to the comer T has become less than the predetermined distance, the damping force of each suspension unit S1 - S4 can be changed to place more emphasis on steering stability immediately before entering the turn around the comer. Moreover, because the road surface is at the most moderate degree of roughness, the automobile is comfortable to drive during straight travel after the distance L to the comer T has become less than the predetermined distance.

In such straight travel of the automobile, when the most current degree of roughness P changes to P = Hi (see step 134 in Fig. 9) or P = Mi (see step 136 in Fig. 9), the determination becomes NO in step 147 and thereafter the flag is set as F = 0 in step 148. Then, by the process at step 148a, similar to the process of the step 142a, the damping level Cn is set in step 148a as damping level for normal travel, i.e., Cn = 2.

Meanwhile, in the case where the distance L of the automobile to the comer T has become less than the predetermined value (YES in step 142) and the determination NO is made in step 143 because the degree of roughness is not P = Lo, if the determination is NO in step 145, the damping level Cn is set as Cn = 2 in step 142a and the damping force of each suspension unit S1 - S4 in straight travel immediately before entering the turn around comer T is controlled in a manner similar to that of control of the damping force by adjusting the aperture opening β at step 150 after a determination of NO in step 142.

On the other hand, when the determination is YES in step 145 on the basis of a detection output of gyro sensor 30b from the computer 30f during straight travel of the automobile and the damping level Cn is determined in step 145a as above, the aperture opening degree β is determined in step 150 from the β-Cn relationship of Fig. 16, based on the damping level Cn and premised on the flag set as F = 1 in step 144.

In the case where the degree of roughness is P = Hi (see step 134 in Fig. 9) and the estimated lateral G is greater than G1 but equal to or smaller than G2 and hence the damping level is determined to be Cn = 3, the aperture opening β of each electromagnetic reduction valve 13 is set as β = 4 by applying the damping level to the β-Cn data map of Fig. 16. This corresponds to that setting β for a road surface having the worst degree of roughness.

The aperture opening β thus determined is output as data in step 150 to the drive circuits 60a - 60d. Based on the output data, the damping force of each suspension unit S1 - S4 is controlled as follows.

For example, in the case where the aperture opening β is output as data representative of β = 4 to the drive circuits 60a - 60d as above (step 150), the drive circuits 60a - 60d adjust the aperture openings of the electromagnetic reduction valves 13 to β = 4, whereby the electromagnetic reduction valves 13 greatly increase the flow of operating oil between the hydraulic chambers 12a, 12b, greatly reduce the resistance to flow of operating oil, and greatly decrease the damping force of the suspension unit S1 - S4.

In this manner, even if the degree of roughness P of road surface is P = Hi (see step 134 in Fig. 9) or P = Mi (see step 136 in Fig. 9), the damping force of the suspension units S1 - S4 is adjusted during straight travel of the automobile and is thereby under control immediately upon commencing cornering (see YES in step 145), whereby the damping force of the suspension units S1 - S4 is controlled in accordance with a determined damping level (determined aperture opening β) in step 145a.

In other words, in cornering of the automobile (a determination of YES in step 145), the damping force of the suspension units S1 - S4 is controlled by adjusting the aperture openings to β = 4, based on information about the comer and the worst degree of roughness of the road surface. Accordingly, the automobile is assured steering stability and riding comfort, immediately upon commencing cornering.

As in the foregoing, after a determination of YES in step 141 due to setting of the flag as F = 1 in step 144, the automobile further travels straight (a determination of NO in step 146). When the automobile commences cornering, there is a determination of YES in step 146 on the basis of output of gyro sensor 30b from the computer 30f. The determination routine of step 149 is then initiated and, when the determination in step 149 is NO, the damping level Cn which has already been determined in step 143a (or 147a) or 145a is maintained. In other words, in the case of a determination NO in step 149 after a determination YES in step 146, the most currently determined damping level Cn, i.e. the damping level Cn immediately before entering the turn at the comer T, is maintained as determined in step 143a or 45a in a previously executed cycle.

Thus, a suitable damping force for each suspension unit S1 - S4 is predicted and set in advance, taking into consideration the degree of roughness of the road surface as detected immediately before or immediately after entering the turn at the comer T of the automobile, in order to hold and utilize that damping force during cornering at the comer T by the automobile.

Accordingly, when the automobile is traveling around the comer T, the suspension units S1 - S4 are controlled with a damping force previously set immediately before or immediately after entering the turn at comer T. As a result, even if the road surface at the comer T is rough, it is possible to favorably maintain steering stability and riding comfort during cornering around the comer T.

Second Embodiment

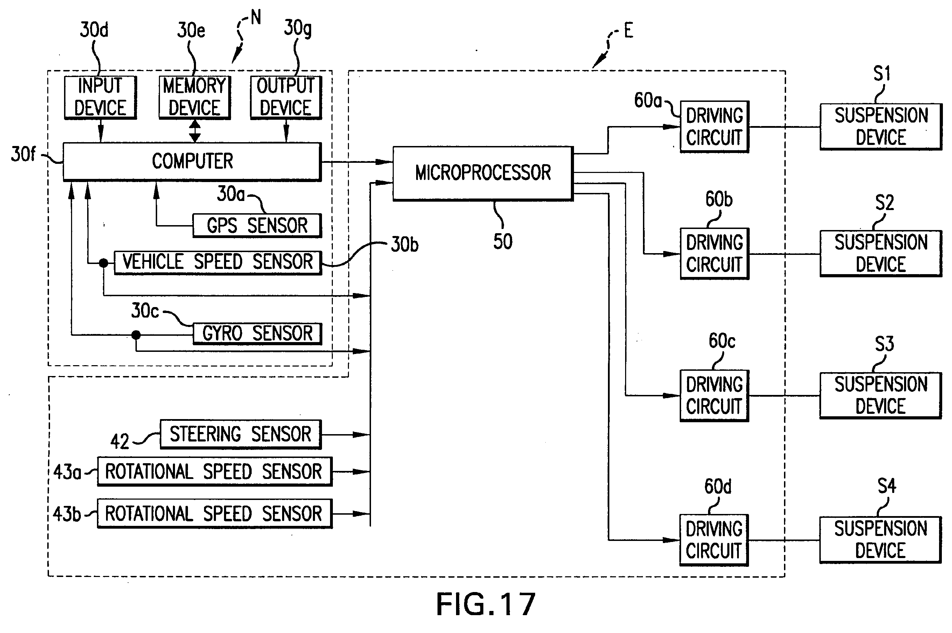

Fig. 17 shows a second embodiment of the invention. This second embodiment employs rotational speed sensors 43a, 43b as shown in Fig. 17 in place of the acceleration sensors 41a - 41d of the first embodiment. These rotational speed sensors 43a, 43b are respectively provided in positions close to the driving wheels of the automobile to detect rotational speeds of the respective drive wheels.

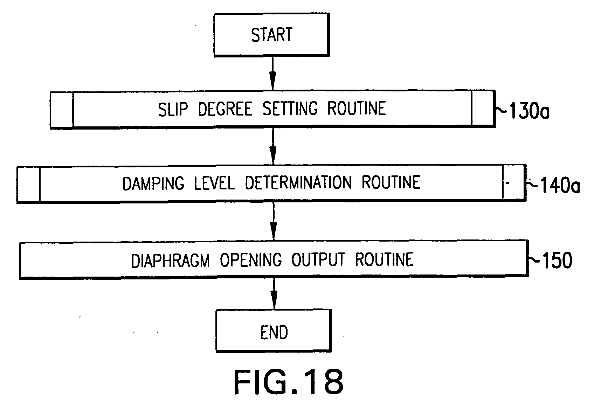

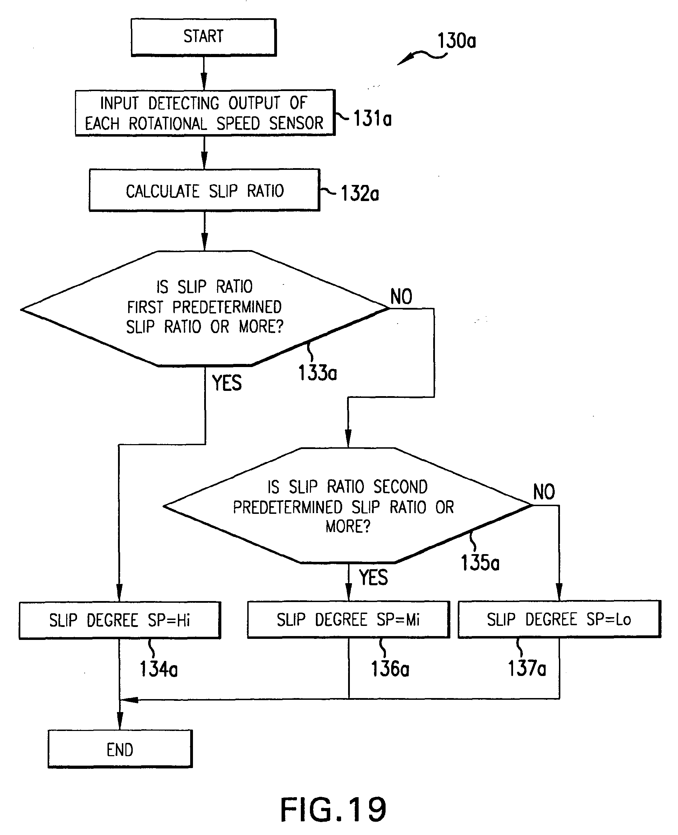

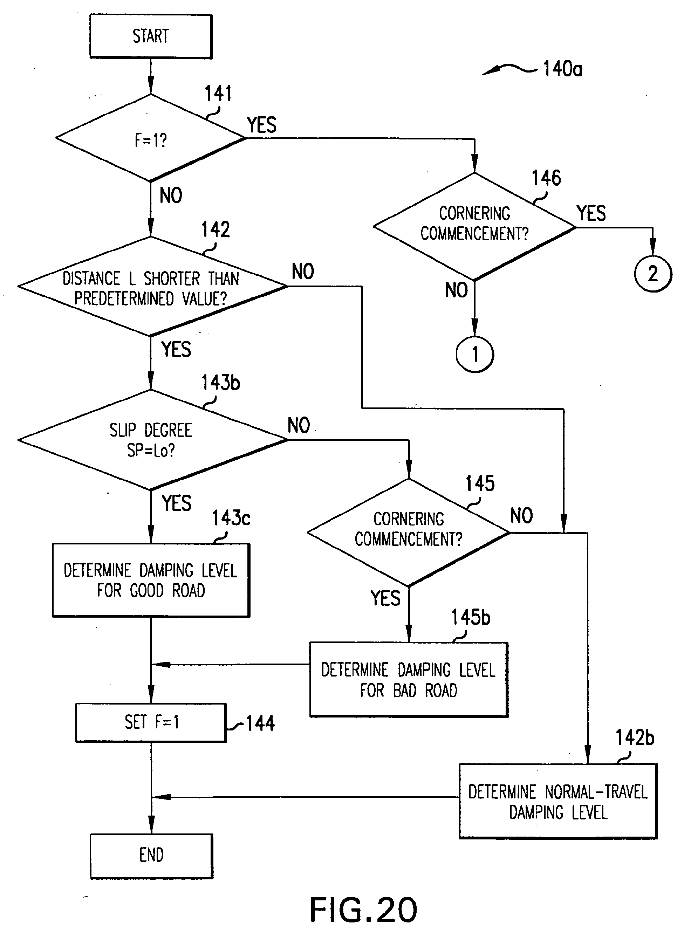

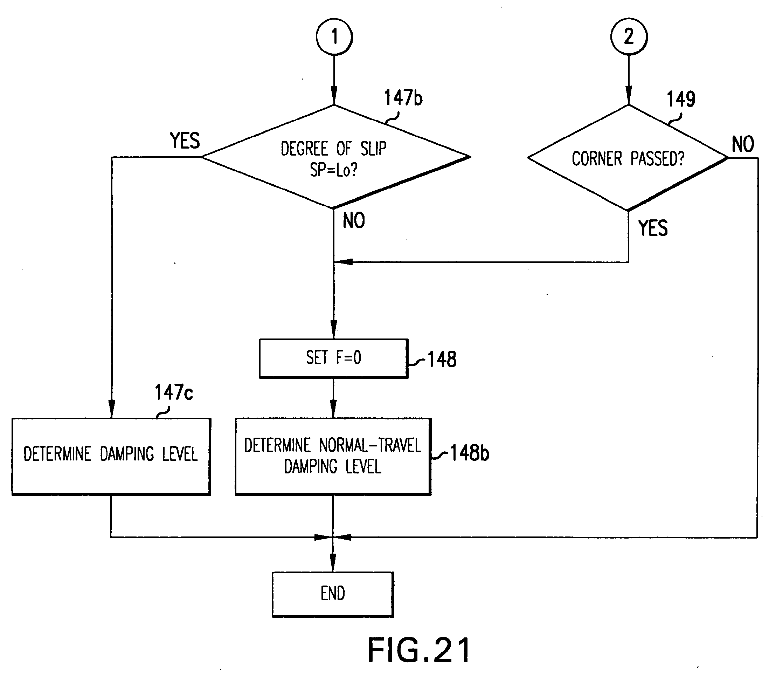

The second embodiment utilizes the control program represented by the flowchart of Fig. 18, instead of the program of the flowchart of Fig. 8 in the first embodiment. Further, the second embodiment utilizes the slip-degree setting routine 130a of Fig. 19 and the damping-level determination routine 140a of Figs. 20 and 21, instead of the roughness-degree setting routine 130 of Fig. 9 and damping-level determination routine 140 of Figs. 10 and 11, utilized in the first embodiment.

In the second embodiment, when the navigation basic routine 100 of Fig. 5 to step 120 has been executed, as described in connection with the first embodiment, the microprocessor 50 of the electronic control unit E starts to execute the suspension control program in accordance with the flowchart of Fig. 18.

Thus, after the suspension control program has been executed through the slip-degree setting routine of step 130a (see Fig. 19), signals from the rotational speed sensors 43a, 43b are input to the microprocessor 50 in step 131a.

Based on these detection signals, the microprocessor 50 then calculates a mean value for rotational speed of the drive wheels (hereinafter, referred to as mean rotational speed ).

Then, in step 132a, a slip ratio is calculated in one of two manners, depending on whether the automobile is in a driven state or in a brake-applied state. Here, a "driven state" means that the automobile is traveling with a positive acceleration relative to the direction of travel. On the other hand, a "brake-applied state" means that the automobile is traveling with a negative acceleration relative to the direction of travel.

The slip ratio, for the case when the automobile is in a driven state, is calculated on the basis of the mean rotational speed a and the vehicle speed V of the vehicle, by use of the following Equation II.

$$\text{II. Slip ratio} = \{(B \times D \times a) - V\} / (B \times D \times a)$$

wherein B has its usual meaning.

D is the diameter of the driving wheel.

For the case wherein the automobile is in a brake-applied state, the slip ratio is calculated on the basis of the mean rotational speed and the vehicle speed V, by use of the following Equation III.

$$\text{III. Slip ratio} = \{V - (B \times D \times a)\} / V$$

Equations II and III are prestored in the ROM of the microprocessor 50.

After step 132a, it is determined in step 133a whether or not the slip ratio calculated is step 132a is equal to or greater than a first predetermined slip ratio. Here, the first predetermined slip ratio corresponds to the worst slip state of the road surface, which, in the present embodiment, is set at 40%, for example.

In the case where the slip ratio is equal to or greater than the first predetermined slip ratio, the determination YES is made in step 133a and then the slip degree is set as SP = Hi in step 134a. Here, the slip degree SP represents slip degree for the road surface traveled by the automobile, while a slip degree SP = Hi represents the worst degree of slip for the road surface.

On the other hand, in the case wherein the determination is NO in step 133a, it is determined in step 135a whether or not the slip ratio is equal to or greater than a second predetermined slip ratio. Here, the second predetermined slip ratio corresponds to a state less slippery than the worst slip state corresponding to the first predetermined slip ratio, which in the present embodiment is set at 20%, for example.

If the slip ratio is equal to or greater than the second predetermined slip ratio, the determination is YES in step 135a and, then, the slip degree is set as SP = Mi in step 136a. Here, the slip degree SP = Mi represents less slipperiness (less tendency of the vehicle to slide on the road surface), than the worst degree of slip which is represented as SP = Hi.

On the other hand, if the determination is NO in step 135a, the slip degree is set as SP = Lo in step 137a. Here, the slip degree SP = Lo represents the least tendency to slide on the road surface, i.e., the lowest degree of slipperiness. As the slip degree changes from SP = Hi, to SP = Mi and to SP = Lo, stepwise, there is a corresponding decrease in the affect on steering stability.

When the slip-degree setting routine 130a is completed, the damping-level determination process routine 140a (see Figs. 18, 20 and 21) is executed. In executing the damping-level determination routine 140a, it is determined in step 141 whether or not the flag F is F = 1, similar to the first embodiment.

If the flag F is F = 0 in step 141, cornering control is not being executed and hence the determination is NO. In the next step 142, it is determined whether or not the distance L, calculated in a manner similar to step 142 (see Fig. 10) in the first embodiment, is less than the predetermined distance.

In the case where the distance L is not less than the predetermined distance, the determination is NO in step 142. In step 142b, the damping level Cn is determined to be Cn = 2, i.e., the normal travel damping level of the automobile.

The determination in step 142 becomes YES when the distance L becomes less than the predetermined distance. Hence, in step 143b, it is determined whether or not the foregoing degree of slip is SP = Lo.

When the degree of slip is SP = Lo (see step 137a in Fig. 19) in step 143b, the road surface the automobile is traveling is least slippery. In step 143c, determination of a damping level Cn common to the suspension units S1 - S4 is executed as follows.

First, an estimated lateral G is calculated based on the speed V of the automobile and the radius of curvature Ra of the comer T, by use of the foregoing Equation 1.

Then, when the degree of slip is SP = Lo (see step 137a in Fig. 19), the damping level Cn is determined as follows based on a data map as represented by Table 3 below, by use of the estimated lateral G.

Table 3

| Estimated Lateral G | Damping Level Cn |
|---|---|
| G3<G | Cn = 7 |
| G2<G≤G3 | Cn = 6 |
| G1<G ≤G2 | Cn = 5 |
| G≤G1 | Cn = 4 |

In the data map of Table 3, the damping level Cn for a degree of slip is SP = Lo is specified in relation to an estimated lateral G. Thus, for example, when the estimated lateral G is greater than G1 and equal to or smaller than G2, the damping level is set as Cn = 5 based on the data map of Table 3. The data map of Table 3 may be prestored in the ROM of the microprocessor 50, together with the data map of Table 4 below.

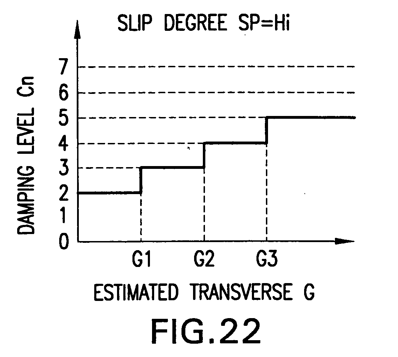

In the relationship between damping level Cn and estimated lateral G of Table 3, damping level Cn increases with increasing estimated lateral G as shown in Fig.22.

After determining a damping level Cn common to the suspension units S1 - S4 in step 143c as above, the flag F is set as F = 1 in step 144.

If the degree of slip is not SP = Lo in the foregoing step 143b, the determination is NO. At the present stage, when the output of the steering sensor 42 represents approximately the neutral position, the automobile has not commenced cornering and hence the determination is NO in step 145. Due to this, in step 142b, the damping level Cn is determined to be Cn = 2, i.e., the normal travel damping level of the automobile, as previously described.

In the foregoing step 145, if the automobile has commenced cornering, the determination is YES based on the output of the steering sensor 42. Then, in step 145b, a determination of a damping level Cn common to the suspension units S1 - S4 is executed as follows.

First, an estimated lateral G is calculated based on the speed V of the automobile and the radius of curvature Ra of the comer T, by use of the foregoing Equation I. Damping level Cn is determined based on the data map shown in Table 4 below, by use of the estimated lateral G and the foregoing degree of slip SP, as follows.

Table 4

| Degree of Slip P | SP = Hi | SP = Mi |
|---|---|---|
| Estimated Lateral G | | |
| G3 < G | Cn = 5 | Cn = 6 |
| G2 < G ≤ G3 | Cn = 4 | Cn = 5 |
| G1 < G ≤ G2 | Cn = 3 | Cn = 4 |
| G ≤ G1 | Cn = 2 | Cn = 3 |

In the data map of Table 4, damping level Cn is specified in relationship with degree of slip SP and estimated lateral G.

Thus, when the degree of slip is SP = Hi (see step 134a in Fig. 19) as above, if the estimated lateral G is greater than G1 and equal to or smaller than G2, the damping level is determined to be Cn = 3 on the basis of the data map of Table 4. In the case that the degree of slip is SP = Mi (see step 136a in Fig. 19), if the estimated lateral G is greater than G1 and equal to or smaller than G2, the damping level is determined to be Cn = 4 on the basis of the data map of Table 4.

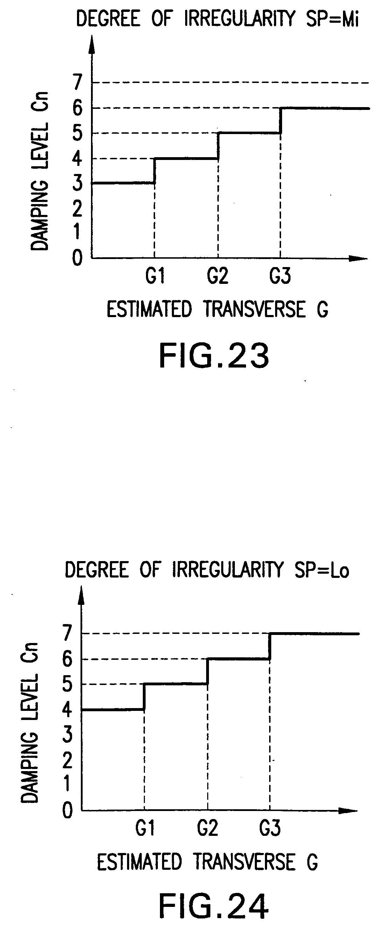

In the relationship between damping level Cn, estimated lateral G and degree of slip SP of Table 4, damping level Cn increases with increasing estimated lateral G in the relationship between a damping level Cn and an estimated lateral G, as shown in Figs. 23 and 24. In the relationship between damping level Cn and degree of slip SP, the damping level Cn decreases as the degree of slip SP changes from SP = Mi to SP = Hi, as shown in Figs. 23 and 24. This means that damping level Cn decreases as degree of slip worsens.

After a damping level Cn is determined which is common to the suspension units S1 - S4 in step 145b as above, the flag F is set as F = 1 at the next step 144, similar to the first embodiment.

If the flag is F = 1 when the damping-level determination routine 140a reaches step 141, cornering control is being executed and hence the determination is YES in step 141. Then, at the present stage, when the output of the steering sensor 42 represents an approximately (nearly) neutral position, the automobile has not yet commenced cornering and hence the determination is NO in step 146. Then, in step 147b of Fig. 21, it is determined whether or not the degree of slip SP is SP = Lo.

In the case where the degree of slip is SP = Lo (see step 137a of Fig. 19), the determination is YES in step 147b. In the next step 147c, a damping level Cn common to the suspension units S1 - S4 is determined by using an estimated lateral G on the basis of the data map of Table 3, similar to step 143c.

On the other hand, when the degree of slip is not SP = Lo, the determination is NO in step 147b and the flag is set as F = 0 in step 148. Then, the damping level Cn is determined in step 148b to be Cn = 2 for the normal travel of the automobile, similar to step 142b.

When the damping-level determination routine 140a reaches step 146, if the automobile has commenced cornering, the determination is YES based on output of the steering sensor 42. Then, in step 149 of Fig. 21, it is determined whether or not the automobile has passed the comer T, similar to the first embodiment. Immediately after a determination of YES in step 146, the determination NO is made in step 149, similar to the first embodiment, on the basis of output of gyro sensor 30b from the computer 30f.

The suspension control program proceeds to the end step of the damping-level determination routine 140a without newly determining a damping level Cn. This means maintaining the damping level Cn which has been determined taking into account the road surface degree of slip immediately after the automobile has commenced cornering (see YES in step 145) or immediately before it has commenced the cornering (see YES in step 147b). This holding of the same damping level Cn is maintained until a determination YES is made in step 149.

Thereafter, when the automobile completes the turn around the comer T, the determination becomes YES in step 149, similar to the first embodiment. In step 148, the flag is set as F = 0 as in the first embodiment. Then, in step 148b, the damping level Cn is determined as Cn = 2, i.e., the normal traveling damping level of the automobile, similar to step 142b.

When execution of the damping-level determination routine 140a (see Figs. 18, 20 and 21) is completed, an aperture setting process is executed in the next step 150 (see Fig. 18). In this process, the degree of opening of the aperture of the electromagnetic reduction valve 13 of each suspension unit S1 - S4 is determined by the process of damping level determination in the foregoing step 142b (or 148b), 143c (or 147c) or 145b or in step 149 with a determination of NO, as follows.

In the case where the determination is NO in step 142 because the distance L of the automobile to the comer T is not smaller than the predetermined value and the damping level Cn is determined Cn = 2 in step 142b (see Fig. 20), a target degree of opening $\beta$ of the electromagnetic reduction valve 13 of each suspension unit S1 - S4 is determined to be $\beta$ = 5 in step 150 on the basis of the damping level Cn = 2, from the $\beta$-Cn graph of Fig. 16.

In case that the degree of opening $\beta$ is determined as $\beta$ = 5 as above, data representative of $\beta$ = 5 is output to the drive circuits 60a - 60d. Based on this output data, each drive circuit 60a - 60d drives the electromagnetic reduction valve 13 to adjust the aperture of each relevant electromagnetic reduction valve 13 to $\beta$ = 5.

Because of a high degree of opening at $\beta$ = 5, the damping force of each suspension unit S1 - S4 is decreased so as to emphasize behavior stability suited for normal travel, when the automobile is traveling straight at a point further from the comer T than the predetermined value.

When the distance L of the automobile to the comer T becomes smaller than the predetermined value (YES in step 142), where the determination YES has been made in step 143b on the basis of a degree of slip SP = Lo (see step 137a in Fig. 19) and thereafter the damping level Cn is determined in step 143c, the degree of opening $\beta$ is determined based on the damping level Cn in step 150 from the $\beta$ - Cn relationship of Fig. 16, as follows.

For example, in the case where the damping level is determined as Cn = 6 because estimated lateral G is greater than G2 but equal to or smaller than G3, the degree of opening degree $\beta$ of each electromagnetic reduction valve 13 is determined as $\beta$ = 1 in step 150 based on the relevant damping level from the $\beta$-Cn relationship of Fig. 16.

The degree of opening $\beta$ thus determined is output as data in step 150 to the drive circuits 60a - 60d. Based on this output data, the damping force of each suspension unit S1 - S4 is controlled as follows.

For example, in case that the aperture data output at step 150 is representative of $\beta$ = 1, the drive circuits 60a - 60d drive the electromagnetic valves 13, to adjust their aperture openings to β = 1. In response, electromagnetic reduction valves 13 greatly increase the damping forces of the suspension unit S1 - S4, similar to the first embodiment.

By thus controlling the damping force of the suspension units S1 - S4 for straight travel of the automobile after the distance L to the comer T becomes less than the predetermined distance, control is changed to place emphasis on steering stability in cornering immediately before the automobile enters the turn around the comer. Moreover, because the road surface is in the least slidable state (least slippery state), as specified by slip degree SP = Lo (see step 137a in Fig. 9), the automobile has good stability during straight travel after the distance L to the comer T becomes less than the predetermined distance.

If the flag is set to F = 1 in step 144 after step 143c, the determination becomes YES in the next execution of step 141. However, because the automobile is traveling straight at the present stage, the determination is NO in step 146, based on output of gyro sensor 30b, similar to the first embodiment.

When the most current degree of roughness SP is SP = Lo in step 137a, damping level Cn is determined in step 147c in a manner similar to the determination in step 143c. Accordingly, even in straight travel of the automobile after the distance L to the comer T has become less than the predetermined distance, control of the damping force of each suspension unit S1 - S4 can be changed to place emphasis on steering stability in cornering immediately before entering the turn around the comer. Moreover, because the road surface is in the least slidable state, the automobile has good stability during straight travel of the automobile after the distance L to the comer T becomes less than the predetermined distance.

In such straight travel of the automobile, when the most current degree of slip SP changes to SP = Hi (see step 134a in Fig. 19) or SP = Mi (see step 136a in Fig. 19), the determination is NO in step 147 and thereafter the flag is set as F = 0 in step 148, similar to the first embodiment. Then, by execution of step 148b, similar to execution of step 142b, damping level Cn is determined as a normal travel damping level Cn = 2. Accordingly, based on the damping level Cn = 2, the damping force of each suspension unit S1 - S4 is controlled similarly to the above.

If the distance L of the automobile to the comer T has become less than the predetermined value (YES in step 142) and the determination is NO in step 143b, because the degree of slip degree is not SP = Lo, so that the determination is NO in step 145 and damping level Cn is determined as Cn = 2 in step 142b, the damping force of each suspension unit S1 - S4 in straight travel of the automobile immediately before entering the turn around the comer T is controlled in a manner similar to control of the damping force by adjusting the aperture opening degree β in step 150 after a NO determination in step 142 as above.

If the determination is YES in step 145, based on output of gyro sensor 30b from the computer 30f during straight travel of the automobile and thereafter damping level Cn is determined in step 145b as above, the aperture opening β is determined in step 150 from the β-Cn relationship of Fig. 16 based on the damping level Cn with the flag set as F = 1 in step 144.

For example, in the case where the degree of slip is SP = Hi (see step 134a in Fig. 19) and estimated lateral G is greater than G1 and equal to or smaller than G2, and hence damping level is determined to be Cn = 3, the aperture opening β of each electromagnetic reduction valve 13 is determined to be β = 4 from the β-Cn relationship of Fig. 16. Such a determination corresponds to a road surface of the worst slip degree.

The aperture opening β thus determined is output as data in step 150 to the drive circuits 60a - 60d. Based on this output data, the damping force of each suspension unit S1 - S4 is controlled as below.

For example, when the aperture opening β is output as data representative of β = 4 to the drive circuits 60a - 60d in step 150 as above, the drive circuits 60a - 60d respectively drive the electromagnetic reduction valves 13, to adjust the aperture opening β of the electromagnetic reduction valves 13 to β = 4.

In this manner, even if the degree of slip SP of the road surface is SP = Hi (see step 134a in Fig. 19) or SP = Mi (see step 136a in Fig. 19), the damping force of the suspension units S1 - S4 is controlled immediately after commencing cornering of the automobile (see determination YES in step 145), whereby the damping force of each suspension unit S1 - S4 is controlled in accordance with the damping level (aperture opening degree β) determined in step 145b.

In other words, immediately after commencing cornering of the automobile, due to a YES determination in step 145, the damping force of each suspension unit S1 - S4 is controlled based on an aperture opening β = 4, matched to the comer information and the degree of slip. Accordingly, the automobile is imparted with stability suited for cornering, immediately after commencing cornering.

As in the foregoing, after a YES determination in step 141, due to setting of the flag to F = 1 in step 144, the automobile travels further straight on the basis of a NO determination in step 146, during which time the automobile commences cornering whereby the determination changes to YES in step 146, based on output of gyro sensor 30b from the computer 30f, and then the routine goes to step 149. Then, when the determination in step 149 is NO as in the foregoing, the damping level Cn previously determined in step 143c (or 147c) or 145b is maintained.

In other words, in the case of a NO determination in step 149, after a YES determination in step 146, following execution of steps 143b, 143c and 144, the most currently determined damping level Cn, i.e. the damping level Cn immediately before entering the turn at the comer T, is maintained in step 143c.

In the case of a NO determination in step 149 after a YES determination in step 146, following execution of steps 143b, 145, 145b and 144, the most recently determined damping level Cn, i.e. the damping level Cn immediately after entering the turn at comer T, is maintained in step 145b.

Thus, the damping force of each suspension unit S1 - S4 is predicted and controlled in advance, taking into consideration the degree of slip of the road surface immediately before or immediately after entering the turn at the comer T, which damping force is held and utilized throughout cornering at the comer T.

Accordingly, as the automobile is traveling around the comer T, the suspension units S1 - S4 are controlled with a damping force previously set immediately before or immediately after entering the turn at the comer T. As a result, even if there is a slip in the road surface at the comer T, it is possible to maintain stability in turning the comer T.

The present invention allows for various modifications of the foregoing embodiments.

(1) Step 142 (see Figs. 10 and 20) may employ a method based on a difference between (1) the time, estimated from vehicle speed V, required for the automobile to travel from a current position X to a curve starting point K as above and (2) a time predetermined to be sufficient for cornering control, in place of the previously described method based on a difference between a distance L and a predetermined distance.

(2) In determining a degree of roughness of the road surface, a single acceleration sensor may be employed in place of the acceleration sensors 41a - 41d of the first embodiment. Alternatively, degree of roughness of the road surface may be determined utilizing a vehicle height sensor for detecting height of the automobile or a stroke sensor for detecting length of expansion/contraction of each suspension unit, instead of the acceleration sensors 41a - 41d.

(3) Instead of calculating an estimated lateral G based on vehicle speed V, a deceleration correcting coefficient Vr and a radius of curvature Ra, by means of the foregoing Equation I, an estimated lateral G may be calculated by squaring a remainder obtained by subtracting a predetermined value (correction) from the vehicle speed V of the automobile and then dividing by a radius of curvature Ra.

(4) Determination of a degree of slip for a road surface the automobile is traveling is not limited to calculating a slip ratio from a driving-wheel rotation speed and speed V of the vehicle by means of the foregoing Equation II and Equation III. Instead, a slip ratio for the road surface may be determined by imaging the road surface or by use of an ultrasonic sensor.

(5) In place of the suspension units S1 - S4, air suspension units may be employed, for example. Active suspension units may be employed which can adjust the vehicle height in order to position-control the automobile even during travel around the comer T.

(6) The radius of curvature Ra of the comer T is not limited to the minimum value of radii of curvature of all the nodes N included in the comer but instead may be a mean value of several points smaller in radius of curvature.

(7) The vehicle to which the present invention is applicable may be a a sedan automobile, a wagon, a microbus or a tram.

(8) The electromagnetic valves 13 may have their aperture openings individually adjusted based on mutually independent damping levels instead of a common damping level.

(9) The damping force of the suspension unit preset before entering a turn around a comer T may be based on a combination of detected degree of roughness and a detected slip state, without limitation to one or the other.

(10) The criteria utilized in step 145 and step 146 is not limited to output of the steering sensor 42 but may be, instead, output of a gyro sensor 30b, for example.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

**Claims**

1. A suspension control system for a vehicle equipped with a navigational device, said suspension control system comprising:

suspension means (S1-S4) interposed between a wheel support member and a frame portion of the vehicle for creating a damping force;
detecting means (41a-41d; 43a, 43b) for detecting a degree of roughness of a road surface or a degree of slip of a road surface as a road surface condition;

vehicle speed detecting means (30b) for detecting vehicle speed;

calculating means (50) for calculating an adjustment value corresponding to the damping force on the basis of the detected vehicle speed, the detected road surface condition and information relative to a comer in the road surface received from the navigation device when the vehicle approaches the comer; and

output means (60a-60d) for outputting the adjustment value to a suspension device so as to control the damping force of the suspension device.

2.  A suspension control system according to claim 1 for a vehicle equipped with a navigation system, said suspension control unit comprising:

suspension means, interposed between a wheel support member and a frame portion of the vehicle, for creating a damping force;

roughness detecting means for detecting a degree of roughness of a road surface traveled by the vehicle;

speed detecting means for detecting traveling speed of the vehicle;

cornering detecting means for detecting cornering by the vehicle;

entrance determining means for determining whether or not the vehicle has entered a turn around a comer based on output of the cornering detecting means;

good-road adjustment calculating means for, responsive to approach of the vehicle to the comer and to detection of a degree of roughness corresponding to a good road surface, calculating a good-road adjustment on the basis of the detected degree of roughness, the detected vehicle speed and comer information from the navigation system;

bad-road adjustment calculating means for, responsive to approach of the vehicle to the comer and to detection of a degree of roughness which does not correspond to a good road surface, determining if the vehicle has entered the turn around the comer and, if the vehicle is determined to have entered the turn around the comer, calculating a bad-road adjustment on the basis of the detected degree of roughness, the detected vehicle speed and comer information from the navigation system; and

output means for outputting to the suspension means the good-road adjustment or the bad-road adjustment for adjustment of the damping force of the suspension means.

3.  A suspension control system according to claim 2 wherein:

when the vehicle enters the turn around the comer with the damping force of the suspension means set in accordance with the good-road adjustment, responsive to detection of a degree of roughness no longer corresponding to a good road surface, said bad-road adjustment calculating means calculates a bad-road adjustment and said output means outputs the calculated bad-road adjustment to the suspension means for adjusting the damping force.

4.  A suspension control system according to claim 1 for a vehicle equipped with a navigation system, said suspension control system comprising:

suspension means, interposed between a wheel support member and a frame portion of the vehicle, for creating a damping force;

roughness detecting means for detecting a degree of roughness of a road surface traveled by the vehicle;

speed detecting means for detecting traveling speed of the vehicle;

good-road adjustment calculating means for, responsive to approach of the vehicle to a comer and to detection of a degree of roughness corresponding to a good road surface, calculating a good-road adjustment on the basis of the detected degree of roughness, the detected vehicle speed and comer information from the navigation system;

normal-travel adjustment calculating means, responsive to a change in the detected degree of roughness from a degree of roughness corresponding to a good road surface to a degree of roughness not corresponding to a good road surface, calculating a normal-travel adjustment on the basis of the detected degree of roughness; and

output means for outputting to the suspension means the good-road adjustment amount or the normal-travel adjustment for adjustment of the damping force of the suspension means.

5.  A suspension control system according to claim 1 for a vehicle equipped with a navigation system, said suspension control system comprising:

suspension means, interposed between a wheel support member and a frame portion of the vehicle, for creating a damping force;
roughness detecting means for detecting a degree of roughness of a road surface traveled by the vehicle;
speed detecting means for detecting traveling speed of the vehicle;
normal-travel adjustment calculating means for, responsive to approach of the vehicle to a comer and detection of a degree of roughness which does not correspond to a good road surface, calculating a normal-travel adjustment on the basis of the detected degree of roughness;
good-road adjustment amount calculating means for, responsive to detection of a degree of roughness which thereafter corresponds to a good road surface, calculating a good-road adjustment on the basis of the detected degree of roughness, the detected vehicle speed and comer information from the navigation system; and
output means for outputting to the suspension means the normal-travel adjustment or the good-road adjustment for adjustment of the damping force of the suspension means.

6. A suspension control system according to claim 1 for a vehicle equipped with a navigation system, said suspension control unit comprising:

suspension means, interposed between a wheel support member and a frame portion of the vehicle, for creating a damping force;
roughness detecting means for detecting a degree of roughness of a road surface traveled by the vehicle;
speed detecting means for detecting traveling speed of the vehicle;
cornering detecting means for detecting cornering by the vehicle;
entrance determining means for determining whether or not the vehicle has entered a turn around a comer based on output of the cornering detecting means;
normal-travel adjustment calculating means for, responsive to approach of the vehicle to the comer and detection of a degree of roughness which does not correspond to a good road surface, calculating a normal-travel adjustment on the basis of the detected degree of roughness;
bad-road adjustment calculating means for, responsive to a determination that the detected degree of roughness remains not corresponding to a good road surface upon entry of the vehicle into the turn around the comer, calculating a bad-road adjustment on the basis of the detected degree of roughness, the detected vehicle speed and comer information from the navigation system; and
output means for outputting to the suspension means the normal-travel adjustment or the bad-road adjustment for adjustment of the damping force of the suspension means.

7. A suspension control system according to any of claims 2 to 6, wherein at least one of the adjustment calculating means extracts a roughness component at a predetermined frequency from signals from the roughness detecting means and calculates an adjustment of the suspension means on the basis of the extracted roughness component.

8. A suspension control system according to claim 1 for a vehicle equipped with a navigation system, said suspension control system comprising:

suspension means, interposed between a wheel support member and a frame portion of the vehicle, for creating a damping force;
slip detecting means for detecting a degree of slip of a road surface traveled by the vehicle;
vehicle-speed detecting means for detecting vehicle speed;
cornering detecting means for detecting cornering by the vehicle;
entrance determining means for determining whether or not the vehicle has entered a turn around a comer based on output of the cornering detecting means;
good-road adjustment calculating means for, responsive to approach of the vehicle to the comer and to detection of a degree of slip corresponding to a good road surface, calculating a good-road adjustment on the basis of the detected degree of slip, the detected vehicle speed and comer information from the navigation system;
bad-road adjustment calculating means for, responsive to approach of the vehicle to the comer and to detection of a degree of slip which does not correspond to a good road surface, determining if the vehicle has entered the turn around the comer, and, if the vehicle is determined to have entered the turn around the comer, calculating a bad-road adjustment on the basis of the detected degree of slip, the detected vehicle speed and comer information from the navigation system; and
output means for outputting to the suspension means the good-road adjustment amount or the bad-road adjustment for adjustment of the damping force of the suspension means.

9. A suspension control system according to claim 8 wherein:

when the vehicle enters the turn around the comer with the damping force of the suspension means set in accordance with the good-road adjustment, responsive to detection of a degree of slip no longer corresponding to a good road surface, said bad-road adjustment calculating means calculates a bad-road adjustment and said output means outputs the calculated bad-road adjustment to the suspension means for adjusting the damping force.

10. A suspension control system according to claim 1 for a vehicle equipped with a navigation system, said suspension control system comprising:

suspension means, interposed between a wheel support member and a frame portion of the vehicle, for creating a damping force;
slip detecting means for detecting a degree of slip of a road surface traveled by the vehicle;
vehicle-speed detecting means for detecting vehicle speed;
good-road adjustment calculating means for, responsive to approach of the vehicle to the comer and to detection of a degree of slip corresponding to a good road surface, calculating a good-road adjustment on the basis of the detected degree of slip, the detected vehicle speed and comer information from the navigation system;
normal-travel adjustment calculating means for, responsive to detection of a degree of slip which no longer corresponds to a good road surface, calculating a normal-travel adjustment on the basis of the detected degree of slip; and
output means for outputting to the suspension means the normal-travel adjustment or the good-road adjustment for adjustment of the damping force of the suspension means.

11. A suspension control system according to claim 1 for a vehicle equipped with a navigation system, said suspension control system comprising:

suspension means, interposed between a wheel support member and a frame portion of the vehicle, for creating a damping force;
slip detecting means for detecting a degree of slip of a road surface traveled by the vehicle;
vehicle-speed detecting means for detecting vehicle speed;
normal-travel adjustment amount calculating means for, responsive to approach of the vehicle to the comer and to detection of a degree of slip which does not correspond to a good road surface state of the traveling road surface, calculating a normal-travel adjustment amount on the basis of the detected degree of slip;
good-road adjustment calculating means for, responsive to detection of a degree of slip which thereafter corresponds to a good road surface, calculating a good-road adjustment on the basis of the detected degree of slip, the detected vehicle speed and comer information from the navigation system; and
output means for outputting to the suspension means the normal-travel adjustment or the good-road adjustment for adjustment of the damping force of the suspension means.

12. A suspension control system according to claim 1 for a vehicle equipped with a navigation system, said suspension control system comprising:

suspension means, interposed between a wheel support member and a frame portion of the vehicle, for creating a damping force;
slip detecting means for detecting a degree of slip of a road surface traveled by the vehicle;
vehicle-speed detecting means for detecting vehicle speed;
cornering detecting means for detecting cornering by the vehicle;
entrance determining means for determining whether or not the vehicle has entered a turn around a comer based on output of the cornering detecting means;
normal-travel adjustment amount calculating means for, responsive to approach of the vehicle to the comer and to detection of a degree of slip which does not correspond to a good road surface state of the traveling road surface, calculating a normal-travel adjustment on the basis of the detected degree of slip;
bad-road adjustment calculating means for, responsive to determination of entrance of the vehicle to the turn around the comer and responsive to detection of a degree of slip which no longer corresponds to a good road surface, calculating a bad-road adjustment on the basis of the detected degree of slip, the detected vehicle speed and comer information from the navigation system; and

output means for outputting to the suspension means the normal-travel adjustment or the bad-road adjustment for adjustment of the damping force of the suspension means.

13. A suspension control system according to any of claims 8 to 12, wherein at least one of the adjustment calculating means determines a slip component at a predetermined frequency from signals from the slip state detecting means and calculates an adjustment for the suspension means on the basis of the slip component thus determined.

14. A suspension control method for a vehicle equipped with a navigation system and suspension means, said method comprising the steps of

detecting vehicle speed;

detecting current position of the vehicle;

detecting a degree of roughness of a road surface or a degree of slip of a road surface as a road surface condition at the detected current position;

responsive to the vehicle approaching a comer, comer information from the navigation system, the detected vehicle speed and the detected road surface condition outputting to the suspension means an adjustment to control the damping force of the suspension.

15. A suspension control method according to claim 14 for a vehicle equipped with a navigation system and suspension means, said method comprising:

detecting vehicle speed;

detecting current position of the vehicle;

determining approach of the vehicle to a comer;

detecting a degree of roughness of the road surface at the detected current position;

responsive to a determination that the vehicle is approaching the comer and to detection of a degree of roughness of the road surface at the detected current position corresponding to a good road surface, calculating a good-road adjustment on the basis of the detected degree of roughness, the detected vehicle speed and comer information from the navigation system;

determining whether or not the vehicle has entered a turn around the comer;

responsive to the vehicle approaching the comer and a detected degree of roughness at the detected current position of the vehicle no longer corresponding to a good road surface, determining if the vehicle has entered a turn around the comer, and, if the vehicle has entered the turn around the comer, calculating a bad-road adjustment on the basis of the detected degree of roughness, the detected vehicle speed and the comer information from the navigation system;

outputting to the suspension means the good-road adjustment or the bad-road adjustment for control of the damping force of the suspension means.

16. A suspension control method according to claim 15 wherein, when the vehicle enters the turn around the comer with the damping force of the suspension means set in accordance with the good-road adjustment, responsive to detection of a degree of roughness no longer corresponding to a good road surface, calculating a bad-road adjustment and outputting the calculated bad-road adjustment to the suspension means for adjusting the damping force.

17. A suspension control method according to claim 14 for a vehicle equipped with a navigation system and suspension means, said method comprising:

detecting vehicle speed;

detecting current position of the vehicle;

detecting a degree of roughness of the road surface at the detected current position;

responsive to the vehicle approaching a comer and detection of a degree of roughness of the road surface at the detected current position corresponding to a good road surface, calculating a good-road adjustment on the basis of the detected degree of roughness, the detected vehicle speed and comer information from the navigation system;

responsive to the detected roughness state thereafter no longer corresponding to a good road surface, calculating a normal-travel adjustment on the basis of the detected degree of roughness; and

outputting to the suspension means the good-road adjustment or the normal-travel adjustment for adjustment of the damping force of the suspension means.

18. A suspension control method according to claim 14 for a vehicle equipped with a navigation system and suspension means, said method comprising:

detecting vehicle speed;
detecting current position of the vehicle;
detecting a degree of roughness of the road surface at the detected current position;
responsive to the vehicle approaching a comer and detection of a degree of roughness of the road surface, at the detected current position, not corresponding to a good road surface, calculating a normal-travel adjustment on the basis of the detected degree of roughness;
responsive to a detected degree of roughness which thereafter corresponds to a good road surface, calculating a good-road adjustment on the basis of the detected degree of roughness, the detected vehicle speed and comer information from the navigation system; and
outputting to the suspension means the normal-travel adjustment or the good-road adjustment for control of damping force of the suspension means.

19. A suspension control method according to claim 14 for a vehicle equipped with a navigation system, said method comprising:

detecting vehicle speed;
detecting a current position of the vehicle;
detecting a degree of roughness of the road surface at the detected current position;
responsive to approach of a vehicle to a comer and detection of a degree of roughness of the road surface at the detected current position of the vehicle which does not correspond to a good road surface, calculating a normal-travel adjustment on the basis of the detected degree of roughness;
determining whether or not the vehicle has entered into a turn around the comer;
after entrance into the turn around the comer, responsive to a change in the detected degree of roughness from a degree of roughness corresponding to a good road surface to a degree of roughness not corresponding to a good road surface, calculating a bad-road adjustment on the basis of the detected degree of roughness, the detected vehicle speed and comer information from the navigation system; and
outputting to the suspension means the normal-travel adjustment or the bad-road adjustment for control of the damping force of the suspension means.

20. A suspension control method according to claim 14 for a vehicle equipped with a navigation system, said method comprising:

detecting vehicle speed;
detecting a current position of the vehicle;
detecting a slip state of the road surface at the detected current position of the vehicle;
responsive to the vehicle approaching a comer and to detection of a slip state corresponding to a good road surface, calculating a good-road adjustment on the basis of the detected slip state, the detected vehicle speed and comer information from the navigation system;
determining whether or not the vehicle has entered into a turn around the comer;
responsive to a determination that the vehicle is approaching the comer and to detection of a slip state of the road surface at the detected current position of the vehicle which does not correspond to a good road surface, if the vehicle is determined to have entered into the turn around the comer, calculating a bad-road adjustment on the basis of the detected slip state, the detected vehicle speed and the comer information from the navigation system; and
outputting to the suspension means the good-road adjustment or the bad-road adjustment for control of the damping force of the suspension means.

21. A suspension control method according to claim 14 for a vehicle equipped with a navigation system and suspension means, said method comprising:

detecting vehicle speed;
detecting a current position of the vehicle;
detecting a slip state of the road surface at the detected current position of the vehicle;
responsive to the vehicle approaching a comer and detection of a slip state of the road surface at the detected current position which corresponds to a good road surface, calculating a good-road adjustment on the basis of the detected slip state, the detected vehicle speed and comer information from the navigation system;

determining whether or not the vehicle has entered into the turn around the comer;

responsive to detection of a slip state which no longer corresponds to a good road surface and to determination of entry of the vehicle into the turn around the comer, calculating a bad-road adjustment on the basis of the detected slip state, the detected vehicle speed and the comer information from the navigation system; and

outputting to the suspension means the good-road adjustment or the bad-road adjustment for control of the damping force of the suspension means.

22. A suspension control method according to claim 14 for a vehicle equipped with a navigation system and suspension means, said method comprising:

detecting vehicle speed;

detecting a current position of the vehicle;

detecting a slip state of the road surface at the detected current position of the vehicle;

responsive to the vehicle approaching a comer and detection of a slip state of the road surface at the detected current position which corresponds to a good road surface, calculating a good-road adjustment on the basis of the detected slip state, the detected vehicle speed and comer information from the navigation system;

responsive to detection of a slip state which no longer corresponds to the good road surface, calculating a normal-travel adjustment on the basis of the detected slip state; and

outputting to the suspension means the good-road adjustment or the normal-travel adjustment for control of the damping force of the suspension means.

23. A suspension control method according to claim 14 for a vehicle equipped with a navigation system and suspension means, said method comprising:

detecting vehicle speed;

detecting a current position of the vehicle;

detecting a slip state of the road surface at the detected current position of the vehicle;

responsive to the vehicle approaching a comer and detection of a slip state of the road surface at the detected current position of the vehicle which does not correspond to a good road surface, calculating a normal-travel adjustment on the basis of the detected slip state;

responsive to detection thereafter of a slip state which corresponds to the good road surface, calculating a good-road adjustment on the basis of the detected slip state, the detected vehicle speed and comer information from the navigation system; and

outputting to the suspension means good-road adjustment or the normal-travel adjustment for control of the damping force of the suspension means.

24. A suspension control method according to claim 14 for a vehicle equipped with a navigation system and suspension means, said method comprising:

detecting vehicle speed;

detecting a current position of the vehicle;

detecting a slip state of the road surface at the detected current position of the vehicle;

responsive to the vehicle approaching a comer and detection of a slip state of the road surface at the detected current position of the vehicle which does not correspond to a good road surface, calculating a normal-travel adjustment on the basis of the detected slip state alone;

determining whether or not the vehicle has entered into a turn around the comer;

responsive to a determination that the detected slip state remains not corresponding to the good road surface upon entry of the vehicle into the turn around the comer, calculating a bad-road adjustment on the basis of the detected slip state, the detected vehicle speed and comer information from the navigation system; and

outputting to the suspension means a normal-travel adjustment or a bad-road adjustment for control of the damping force of the suspension means.

25. A suspension control system according to claim 12, wherein the normal travel adjustment is calculated only after a determination that the vehicle has not entered the turn around the comer.

26. A suspension control method according to any of claims 7, 8 or 12, 13 wherein the normal travel adjustment is calculated only after a determination that the vehicle has not started the turn around the comer.

S1 — SUSPENSION DEVICE

S2 — SUSPENSION DEVICE

S3 — SUSPENSION DEVICE

S4 — SUSPENSION DEVICE

60a — DRIVING CIRCUIT

60b — DRIVING CIRCUIT

60c — DRIVING CIRCUIT

60d — DRIVING CIRCUIT

E

MICROPROCESSOR

50

30g — OUTPUT DEVICE

30e — MEMORY DEVICE

30d — INPUT DEVICE

N

COMPUTER

30f

30a — GPS SENSOR

30b — VEHICLE SPEED SENSOR

30c — GYRO SENSOR

41a — ACCELERATION SENSOR

41b — ACCELERATION SENSOR

41c — ACCELERATION SENSOR

41d — ACCELERATION SENSOR

42 — STEERING SENSOR

FIG.1

FIG.2

FIG.3

FIG.4

```
┌─────────────┐
│    START    │
└──────┬──────┘
       │
┌──────▼────────────────────────────┐
│    NAVIGATION  BASIC  ROUTINE      │~100
└──────┬────────────────────────────┘
       │
┌──────▼─────────────────────────────────────┐
│  RUNNING  ENVIRONMENT  RECOGNITION  ROUTINE │~110
└──────┬─────────────────────────────────────┘
       │
┌──────▼─────────────────────────────────────────┐
│  RUNNING  ENVIRONMENT  INFORMATION  TRANSMISSION│~120
└──────┬─────────────────────────────────────────┘
       │
┌──────▼──────┐
│     END     │
└─────────────┘
```

# FIG.5

```
                ┌─────────────┐
                │    START    │            100
                └──────┬──────┘
          ┌───────────►│              101
          │          ◇─┴─◇
       NO │        ◇         ◇
          └──── ◇ DISPLAY REQUEST? ◇
                  ◇             ◇
                    ◇         ◇
                       ◇   ◇
                        │YES
          ┌─────────────▼───────────┐
          │  MAP DATA READING ROUTINE│~102
          └─────────────┬───────────┘
                        │
          ┌─────────────▼───────────┐
          │    MAP DISPLAY ROUTINE   │~103
          └─────────────┬───────────┘
                        │
          ┌─────────────▼───────────┐
          │   ROUTE SEARCH ROUTINE   │~104
          └─────────────┬───────────┘
                        │
          ┌─────────────▼───────────┐
          │  ROUTE GUIDANCE ROUTINE  │~105
          └─────────────┬───────────┘
                        │
                ┌───────▼─────┐
                │     END     │
                └─────────────┘
```

# FIG.6

EP 1 541 389 A2

START

CURVE STARTING POINT JUDGEMENT ROUTINE ~111

RADIUS OF CURVATURE CALCULATING ROUTINE ~112

END

## FIG.7

START

DEGREE OF IRREGULARITY SETTING ROUTINE ~130

DAMPING LEVEL DETERMINATION ROUTINE ~140

DIAPHRAGM APERTURE OUTPUT ~150

END

## FIG.8

```
                    ┌──────────────┐
                    │    START     │
                    └──────────────┘
                           │
                           ▼
              ┌───────────────────────────┐
              │  INPUT DETECTING SIGNAL OF │ ~131
              │  EACH ACCELERATION SENSOR  │
              └───────────────────────────┘
                           │
                           ▼
              ┌───────────────────────────┐
              │  FILTER PROCESSING ROUTINE │ ~132
              └───────────────────────────┘
                           │
                           ▼
                   ╱─────────────────╲
                  ╱   IS AVERAGED     ╲        NO
                 ╱    ACCELERATION     ╲────────────┐
                ╱ COMPONENT EQUAL TO FIRST╲          │
                ╲ PREDETERMINED ACCELERATION╱         │
                 ╲     OR MORE?      ╱  133           │
                  ╲─────────────────╱                │
                       YES │                         │
                           │                         ▼
                           │              ╱─────────────────╲
                           │             ╱   IS AVERAGED     ╲      NO
                           │            ╱    ACCELERATION     ╲──────────┐
                           │           ╱ COMPONENT EQUAL TO SECOND╲      │
                           │           ╲ PREDETERMINED ACCELERATION╱      │
                           │            ╲    OR MORE?      ╱ 135         │
                           │             ╲─────────────────╱             │
                           │                 YES │                       │
                           │                     ▼                       │
                           │         ┌────────────────────────┐          │
                           │         │ DEGREE OF IRREGULARITY  │          │
                           │         │         P=Mi            │          │
                           │         └────────────────────────┘          │
                           │              136 │                          │
                           ▼                  │                          ▼
          ┌────────────────────────┐          │        ┌────────────────────────┐
          │ DEGREE OF IRREGULARITY │          │        │ DEGREE OF IRREGULARITY │
          │         P=Hi           │          │        │         P=Lo           │
          └────────────────────────┘          │        └────────────────────────┘
               134 │                          │             137 │
                   │                          │                 │
                   │                          ▼◄────────────────┘
                   ▼
          ┌──────────────┐
          │     END      │
          └──────────────┘
```

130

## FIG.9

EP 1 541 389 A2

FIG.10

30

EP 1 541 389 A2

FIG.11

FIG.12

DEGREE OF IRREGULARITY P=Lo

FIG.13

DEGREE OF IRREGULARITY P=Mi

FIG.14

DEGREE OF IRREGULARITY P=Hi

FIG.15

FIG.16

FIG.17

EP 1 541 389 A2

START

SLIP DEGREE SETTING ROUTINE ~130a

DAMPING LEVEL DETERMINATION ROUTINE ~140a

DIAPHRAGM OPENING OUTPUT ROUTINE ~150

END

FIG.18

START

INPUT DETECTING OUTPUT OF
EACH ROTATIONAL SPEED SENSOR ~131a

130a

CALCULATE SLIP RATIO ~132a

IS SLIP RATIO
FIRST PREDETERMINED
SLIP RATIO OR MORE? 133a

NO

YES

IS SLIP RATIO SECOND
PREDETERMINED SLIP RATIO OR
MORE? 135a

NO

YES

SLIP DEGREE SP=Hi

134a

SLIP DEGREE SP=Mi

136a

SLIP DEGREE SP=Lo

137a

END

FIG.19

START

141
F=1? — YES

140a

146
CORNERING COMMENCEMENT? — YES → (2)

NO

NO

142
DISTANCE L SHORTER THAN PREDETERMINED VALUE? — NO

YES

(1)

143b
SLIP DEGREE SP=Lo? — NO

YES

145
CORNERING COMMENCEMENT? — NO

YES

143c
DETERMINE DAMPING LEVEL FOR GOOD ROAD

145b
DETERMINE DAMPING LEVEL FOR BAD ROAD

142b
DETERMINE NORMAL-TRAVEL DAMPING LEVEL

SET F=1 — 144

END

FIG.20

FIG.21

EP 1 541 389 A2

FIG.22

DEGREE OF IRREGULARITY SP=Mi

FIG.23

DEGREE OF IRREGULARITY SP=Lo

FIG.24

FIG.25